# EUROPEAN PATENT APPLICATION

(11) **EP 4 769 873 A1**
(43) Date of publication of application: **01.07.2026**
(21) Application number: 24890164.7
(22) Date of filing: 18.07.2024
(51) Int. Cl.: H02J 7/00, G06F 1/26, G06F 13/38

(54) **CHARGING METHOD, ELECTRONIC DEVICE, AND RELATED APPARATUS**

(30) Priority: 17.11.2023 CN 202311532706
(71) Applicant: Honor Device Co., Ltd., Shenzhen, Guangdong 518040 (CN)
(72) Inventor: ZHANG, Tingwei, Shenzhen, Guangdong 518040 (CN); WANG, Mu, Shenzhen, Guangdong 518040 (CN); LI, Zhongming, Shenzhen, Guangdong 518040 (CN); QIN, Hengliang, Shenzhen, Guangdong 518040 (CN); MA, Pengfei, Shenzhen, Guangdong 518040 (CN); XU, Ke, Shenzhen, Guangdong 518040 (CN)
(74) Representative: Gill Jennings & Every LLP
(86) International application number: PCT/CN2024/106253
(87) International publication number: WO 2025/102798

(57) **Abstract**

Embodiments of this application provide a charging method, an electronic device, and a related apparatus. The electronic device includes one or more universal serial bus USB ports, and the electronic device is connected to a first external device through a first USB port in the one or more USB ports. The method may include: The electronic device and the first external device determine charging power of a first specification based on a first message; the electronic device outputs the charging power of the first specification to the first external device; and when the first external device supports higher charging power, the electronic device outputs charging power of a second specification to the first external device based on a protocol interaction result between the electronic device and the first external device, where the charging power of the second specification includes charging power at a highest charging level that can be received by the first external device. According to this application, different charging power may be provided for an external device.

## Description

This application claims priority to Chinese Patent Application No. 202311532706.8, filed with the China National Intellectual Property Administration on November 17, 2023 and entitled "CHARGING METHOD, ELECTRONIC DEVICE, AND RELATED APPARATUS", which is incorporated herein by reference in its entirety.

### TECHNICAL FIELD

This application relates to the field of electronic technologies, and in particular, to a charging method, an electronic device, and a related apparatus.

### BACKGROUND

Currently, more terminal devices support a universal serial bus (universal serial bus, USB) Type-C port, and share one USB Type-C port for charging and data transmission. For example, a personal computer (personal computer, PC) product, for example, a desktop computer (Desktop), an all-in-one computer, and a notebook computer (Notebook or Laptop) may be used as a power supply, and provide a charging current for the terminal device through the USB Type-C port, to charge the terminal device.

The USB Type-C port of the PC product supports a USB power delivery (power delivery, PD) protocol, and supports providing a charging power supply of, for example, a maximum of 5 V/3 A for a connected terminal device. How to increase a charging current that can be provided by the PC product requires further research.

### SUMMARY

Embodiments of this application provide a charging method, an electronic device, and a related apparatus. A connection to an external device may be established through a USB port, to provide different charging power for the external device.

According to a first aspect, this application provides a charging method. The method is applied to an electronic device, the electronic device includes one or more universal serial bus USB ports, the electronic device is connected to a first external device through a first USB port in the one or more USB ports, and the method includes:
sending a first message to the first external device through the first USB port, where the first message includes charging power that the electronic device supports outputting to the first external device;
receiving, from the electronic device, a request for charging power of a first specification, where the charging power of the first specification is the charging power that the electronic device supports outputting to the first external device;
outputting the charging power of the first specification to the first external device through the first USB port;
receiving, from the electronic device, a request for charging power of a second specification, where the charging power of the second specification includes charging power of a highest charging level that can be received by the first external device, the charging power of the second specification is the charging power that the electronic device supports outputting to the first external device, and the charging power of the second specification is greater than the charging power of the first specification; and
outputting the charging power of the second specification to the first external device through the first USB port.

In an implementation, the USB port includes a USB Type-C port.

According to this embodiment of this application, after the first external device establishes a connection to the electronic device through the USB port, the electronic device may first broadcast, to the first external device, the charging power that the electronic device supports for output. After receiving a response from the first external device, the electronic device first outputs the charging power of the first specification (default charging power, for example, 5 V/2 A) to the first external device. When the first external device supports higher charging power, the first external device may send a request for higher charging power to the electronic device. The electronic device responds to the request, and provides, for the first external device, the charging power at the highest charging level that can be received by the first external device. It may be understood that because the electronic device may provide charging power of various specifications, for the request of the first external device, the electronic device may provide charging power of different specifications for the external device, to satisfy different charging requirements.

In a possible implementation of the first aspect, the electronic device further includes a switch switching circuit and a processor. The switch switching circuit corresponds to the one or more USB ports, and the switch switching circuit is connected to the processor and short-circuited to a 0-ohm resistor. The processor is configured to satisfy requirements of some external devices to provide higher charging power for an electronic device when the electronic device is a DCP port, or satisfy charging solutions of some private protocols.

It can be learned that the USB port may be switched to be connected to the processor or be short-circuited to the 0-ohm resistor through the switch switching circuit. When the USB port is connected to the processor through the switch switching circuit, the electronic device may be considered as an SDP port, and when the USB port is short-circuited to the 0-ohm resistor through the switch switching circuit, the electronic device may be considered as a DCP port.

In a possible implementation of the first aspect, the outputting the charging power of the second specification to the first external device through the first USB port includes:
when it is determined that a system of the electronic device is not in a working state and/or a battery level of the electronic device is greater than or equal to a preset threshold, outputting the charging power of the second specification to the first external device through the first USB port.

It can be learned that, in this application, the electronic device outputs charging power externally while ensuring charging requirements of the electronic device. This does not affect power requirements of the electronic device.

In a possible implementation of the first aspect, the electronic device is connected to a second external device through a second USB port in the one or more USB ports, and the outputting the charging power of the second specification to the first external device through the first USB port includes:
when it is determined that the second external device located at the second USB port does not charge the electronic device, outputting the charging power of the second specification to the first external device through the first USB port.

It can be learned that, when another USB port is also connected to a device, whether the device charges the electronic device needs to be determined, and when another device does not charge the electronic device, higher charging power is output to the first external device. When another device charges the electronic device, normal charging power is restored. Therefore, unstable performance of the electronic device caused by outputting higher charging power when the electronic device is charged can be avoided.

In a possible implementation of the first aspect, the switch switching circuit is configured to be connected to the first USB port and the processor, and after the outputting the charging power of the first specification to the first external device through the first USB port and before the receiving, from the electronic device, a request for charging power of a second specification, the method further includes:
receiving a fast charging request from the first external device;
controlling, in response to the fast charging request, the switch switching circuit to switch from being connected to the processor to being connected to the 0-ohm resistor; and
performing protocol interaction with the first external device through the first USB port, and determining that the electronic device is a dedicated charging port DCP port.

It can be learned that, when the switch switching circuit is switched to be connected to the first USB port and the processor, the electronic device is identified as an SDP port. If fast charging needs to be performed for the first external device, the switch switching circuit may be switched to be connected to the first USB port and the 0-ohm resistor. In this way, the electronic device is identified as a DCP port, and may output higher charging power to the first external device.

In a possible implementation of the first aspect, the electronic device is connected to a second external device through a second USB port in the one or more USB ports, and the receiving a fast charging request from the first external device includes:
when it is determined that the second external device located at the second USB port does not charge the electronic device, receiving the fast charging request from the first external device.

It can be learned that, when another USB port is also connected to a device, whether the device charges the electronic device needs to be determined, and when another device does not charge the electronic device, the fast charging request from the first external device is received. When another device charges the electronic device, normal charging power is restored. Therefore, unstable performance of the electronic device caused by outputting higher charging power when the electronic device is charged can be avoided.

In a possible implementation of the first aspect, when the switch switching circuit is connected to the first USB port and the 0-ohm resistor, the electronic device is a DCP port.

It can be learned that, after the electronic device is identified as the DCP port, the electronic device may support some levels of a PD protocol and a PPS, to output different and higher charging power externally.

In a possible implementation of the first aspect, the electronic device is connected to a second external device through a second USB port in the one or more USB ports, and the outputting the charging power of the second specification to the first external device through the first USB port includes:
when it is determined that the second external device located at the second USB port does not charge the electronic device, outputting the charging power of the second specification to the first external device through the first USB port.

It can be learned that, when the electronic device is identified as a DCP port, if another USB port is also connected to a device, whether the device charges the electronic device needs to be determined, and when another device does not charge the electronic device, higher charging power is output to the first external device. When another device charges the electronic device, normal charging power is restored. Therefore, unstable performance of the electronic device caused by outputting higher charging power when the electronic device is charged can be avoided.

In a possible implementation of the first aspect, after the outputting the charging power of the second specification to the first external device through the first USB port, the method further includes:
receiving, from the electronic device, a request for charging power of a third specification; and
adjusting a voltage and current based on the request for the charging power of the third specification, and outputting a voltage and current corresponding to the request for the charging power of the third specification.

It can be learned that the electronic device may adjust the voltage and current in real time based on a requirement of the first external device, to output charging power matching the requirement of the first external device, so as to adapt to different application environments.

In a possible implementation of the first aspect, the electronic device includes one or more of a power delivery module, a control unit, and a power supply module, and the outputting the charging power of the second specification to the first external device through the first USB port includes:
enabling an OTG function of the power supply module by using the control unit;
turning on a second switch of the power supply module by using the power delivery module, where the second switch is configured to be connected to the first USB port and a charger chip in the power supply module, and the charger chip in the power supply module is configured to provide the charging power of the second specification; and
outputting the charging power of the second specification to the first external device through the first USB port based on the OTG function and the second switch in an on state.

It can be learned that the electronic device outputs higher charging power by using the control unit, the power delivery module, and the power supply module.

According to a second aspect, this application provides an electronic device, including one or more of one or more universal serial bus USB ports, a power delivery module, a control unit, and a power supply module. The electronic device is connected to a first external device through a first USB port in the one or more USB ports.

The power delivery module is configured to send a first message to the first external device through the first USB port, where the first message includes charging power that the electronic device supports outputting to the first external device.

The power delivery module is configured to receive, from the first external device through the first USB port, a request for charging power of a first specification, where the charging power of the first specification is the charging power that the electronic device supports outputting to the first external device.

The control unit is configured to control the power supply module to output the charging power of the first specification.

The power delivery module is configured to output the charging power of the first specification to the first external device through the first USB port.

The power delivery module is further configured to receive, from the first external device through the first USB port, a request for charging power of a second specification, where the charging power of the second specification includes charging power of a highest charging level that can be received by the first external device, the charging power of the second specification is the charging power that the electronic device supports outputting to the first external device, and the charging power of the second specification is greater than the charging power of the first specification.

The control unit is configured to control said power supply module to output the charging power of the second specification.

The power delivery module is configured to output the charging power of the second specification to the first external device through the first USB port.

In a possible implementation of the second aspect, the electronic device further includes a switch switching circuit and a processor. The switch switching circuit corresponds to the one or more USB ports, and the switch switching circuit is connected to the processor and short-circuited to a 0-ohm resistor.

According to a third aspect, an embodiment of this application provides an electronic device. The electronic device includes one or more USB ports, one or more processors, and a memory. The USB port is configured to establish a connection to a device having the USB port, the memory is coupled to the one or more processors, and the memory is configured to store computer program code. The computer program code includes computer instructions, and the one or more processors invoke the computer instructions to enable the electronic device to perform the charging method according to any one of the first aspect or the possible implementations of the first aspect.

According to a fourth aspect, this application provides a chip or a chip system. The chip or the chip system includes at least one processor and a communication interface. The communication interface and the at least one processor are interconnected through a line. The at least one processor is configured to run a computer program or instructions, to perform the charging method according to any one of the first aspect or the possible implementations of the first aspect. The communication interface in the chip may be an input/output interface, a pin, a circuit, or the like.

In a possible implementation, the chip or chip system described above in this embodiment of this application further includes at least one memory, and the at least one memory stores instructions. The memory may be a storage unit inside the chip, for example, a register or a cache, or may be a storage unit (for example, a read-only memory or a random access memory) of the chip.

According to a fifth aspect, an embodiment of this application provides a computer storage medium. The computer storage medium stores a computer program. When the computer program is executed by a processor, a computer is enabled to perform the charging method according to any one of the first aspect or the possible implementations of the first aspect.

According to a sixth aspect, an embodiment of this application provides a computer program product. When the computer program product runs on a communication apparatus, the communication apparatus is enabled to perform the charging method according to any one of the first aspect or the possible implementations of the first aspect.

It should be understood that descriptions of technical features, technical solutions, beneficial effects or similar expressions in this application do not imply that all features and advantages can be achieved in any single embodiment. On the contrary, it may be understood that descriptions of features or beneficial effects mean that specific technical features, technical solutions, or beneficial effects are included in at least one embodiment. Therefore, the descriptions of the technical features, the technical solutions, or the beneficial effects in the specification do not necessarily mean a same embodiment. Further, the technical features, technical solutions, and beneficial effects described in this embodiment may be combined in any suitable manner. A person skilled in the art understands that embodiments can be implemented without one or more particular technical features, technical solutions, or beneficial effects of a particular embodiment. In other embodiments, additional technical features and beneficial effects may be further recognized in a specific embodiment that does not reflect all embodiments.

### BRIEF DESCRIPTION OF DRAWINGS

The following describes accompanying drawings used in embodiments of this application.
FIG. 1 is a schematic diagram of a structure of an electronic device according to an embodiment of this application;
FIG. 2 is a schematic diagram of an architecture of an electronic device according to an embodiment of this application;
FIG. 3 is a schematic diagram of a charging scenario of a single Type-C port based on a first charging circuit according to an embodiment of this application;
FIG. 4 is a schematic flowchart of a charging scenario of a single Type-C port based on a first charging circuit;
FIG. 5 is a schematic diagram of a charging scenario of dual Type-C ports based on a first charging circuit according to an embodiment of this application;
FIG. 6 is a schematic flowchart of a charging scenario of dual Type-C ports based on a first charging circuit;
FIG. 7 is a schematic diagram of an architecture of another electronic device according to an embodiment of this application;
FIG. 8 is a schematic diagram of a charging scenario of a single Type-C port based on a second charging circuit according to an embodiment of this application;
FIG. 9 is a schematic flowchart of a charging scenario of a single Type-C port based on a second charging circuit;
FIG. 10 is a schematic flowchart of another charging scenario of a single Type-C port based on a second charging circuit;
FIG. 11 is a schematic diagram of a charging scenario of dual Type-C ports based on a second charging circuit according to an embodiment of this application;
FIG. 12A to FIG. 12C are a schematic flowchart of a charging scenario of dual Type-C ports based on a second charging circuit;
FIG. 13A to FIG. 13C are a schematic flowchart of another charging scenario of dual Type-C ports based on a second charging circuit; and
FIG. 14 is a schematic flowchart of a charging method according to an embodiment of this application.

### DESCRIPTION OF EMBODIMENTS

Terms used in the following embodiments of this application are merely intended to describe specific embodiments, but are not intended to limit this application. The terms "one", "a", "the", "the foregoing", "this", and "the one" of singular forms used in this specification and the appended claims of this application are also intended to include plural forms, unless otherwise specified in the context clearly. It should also be understood that the term "and/or" used in this application means and includes any or all possible combinations of one or more listed items.

The terms "first" and "second" below are used for descriptive purposes only, and cannot be construed as implying or implying relative importance or implicitly indicating a quantity of indicated technical features. Therefore, a feature defined with "first" and "second" may explicitly or implicitly includes one or more features. In the descriptions of embodiments of this application, unless otherwise stated, "a plurality of" means two or more.

For ease of understanding of embodiments of this application, terms or concepts that may be used in embodiments are described below.
1. A power delivery (power delivery, PD) protocol is a communication protocol used for electric energy delivery between a power adapter and a charger. In the PD protocol, communication is performed between the power adapter and the charger to implement intelligent power delivery management. A voltage and a current may be adjusted automatically based on a requirement of a device, to provide a charging capability most suitable for the device. The PD protocol further supports bidirectional communication, and allows the device to send a request to the power adapter, for example, adjusting power and obtaining device information.
2. USB Type-C is a USB port of a class C defined by the USB Implementers Forum, supports symmetrical plug and unplug of both front and back, may use any USB delivery protocol such as a USB2.0 protocol, a USB3.0 protocol, or a USB3.1 protocol, and supports functions of USB standard, for example, charging, data transmission, audio transmission, and display and output.

A difference between a USB Type-C standard relative to an old standard is that a dual-role capability is introduced. Both ends of each USB Type-C cable are completely identical, which means two connected devices need to communicate with each other to determine whether the device is a host or peripheral. Role communication needs to be separately performed for data and a power supply. In terms of data, a host port used for data communication is referred to as a downstream facing port (downstream facing port, DFP), and a peripheral port is referred to as an upstream facing port (upstream facing port, UFP). In terms of a power supply, a power supply port is referred to as a Source (Source), and a power consumption port is referred to as a Sink (Sink). Some devices can have both a dual-role capability on data and a dual-role capability on a power supply.

The USB Type-C cable supports providing a maximum charging voltage/current/power of 5 V/3 A (that is, 15 W), and if the PD protocol is used, the maximum charging voltage/current/power may be increased to 20 V/5 A (that is, 100 W). The USB PD3.0 protocol supports a programmable power supply (programmable power supply, PPS) protocol, allowing precise regulation of a voltage and a current.
3. A charging standard BC1.2 uses a communication mode based on USB2.0 D+/D- lines. Port types defined by the charging standard BC1.2 include the following three types: a standard downstream port (standard downstream port, SDP), a dedicated charging port (dedicated charging port, DCP), and a charging downstream port (charging downstream port, CDP).
4. A system sleep state (S-State) includes but is not limited to six levels: S0 to S5.

S0 corresponds to a powered-on state.

S1 and S2 correspond to sleep states. S1 corresponds to a state in which a processor stops working but is still powered on, and S2 corresponds to a state in which the processor is turned off and powered off, while a peripheral device like Bluetooth keeps running.

S3 corresponds to a standby state during sleep, to be specific, a state in which all devices, including the processor, are powered off, while an internal memory keeps running.

S4 corresponds to a sleep state.

S5 corresponds to a powered-off state.

Generally, a PC product having a USB Type-C port can charge a terminal device like a mobile phone or a tablet. After handshake between the PC product and the terminal device according to a charging protocol (for example, a PD protocol) succeeds, the PC product may provide a maximum charging voltage/current/power of 5 V/3 A (that is, 15 W), but a charging current is usually limited to 2 A according to a specification. In addition, the terminal device identifies, by default, a port of the PC product as an SDP by using a BC2.1 protocol, and performs data communication with the PC product based on a USB2.0 protocol. It may be understood that the PC product can provide higher charging power for the terminal device based on a PD3.0 or a PD2.0. However, the current terminal device needs to identify a port of a Source (Source) as a DCP before supporting some charging levels of the PD protocol and a PPS. Because the current terminal device identifies by default, after establishing a connection to the PC product, that the port of the PC product is the SDP, charging levels that can be provided by the PC product for the terminal device are limited.

Based on this, this application provides a charging method, an electronic device, and a related apparatus. The electronic device includes one or more USB ports, and the electronic device is connected to a first external device through a first USB port in the one or more USB ports. The electronic device broadcasts supported external charging power to the first external device through the first USB port. The first external device first requests charging power of 5 V/2 A. The electronic device responds to the request, and outputs the charging power of 5 V/2 A to the first external device. Subsequently, if the first external device supports higher charging power (for example, 9 V/2 A), the first external device requests higher charging power (for example, 9 V/2 A) from the electronic device. The electronic device responds to a request, and outputs charging power of, for example, 9 V/2 A to the first external device. It can be learned that the electronic device may provide different charging levels for the first external device.

In a possible implementation, the electronic device further includes a switch switching circuit and a processor. The switch switching circuit corresponds to the one or more USB ports, and the switch switching circuit is connected to the processor and short-circuited to a 0-ohm resistor. When the electronic device performs fast charging for the first external device, the electronic device may control the switch circuit to switch to be connected to the 0-ohm resistor. The electronic device performs protocol interaction with the first external device through the first USB port, and it may be determined that the electronic device is a dedicated charging port DCP port. When the electronic device is identified as the DCP port, some charging levels of the PD protocol and a PPS may be supported.

First, an embodiment of this application provides an electronic device. The electronic device may be used as a power supply to charge a to-be-charged device. The electronic device/to-be-charged device provided in embodiments of this application may be, but is not limited to, a notebook computer (notebook or laptop), a tablet computer, a mobile phone, a desktop computer, an all-in-one computer, a personal digital assistant (personal digital assistant, PDA for short), and may alternatively be a vehicle-mounted computer, a smart wearable device, a smart home device, augmented reality (augmented reality, AR)/virtual reality (virtual reality, VR), or the like. A specific type of the foregoing electronic device and to-be-charged device is not limited in embodiments of this application.

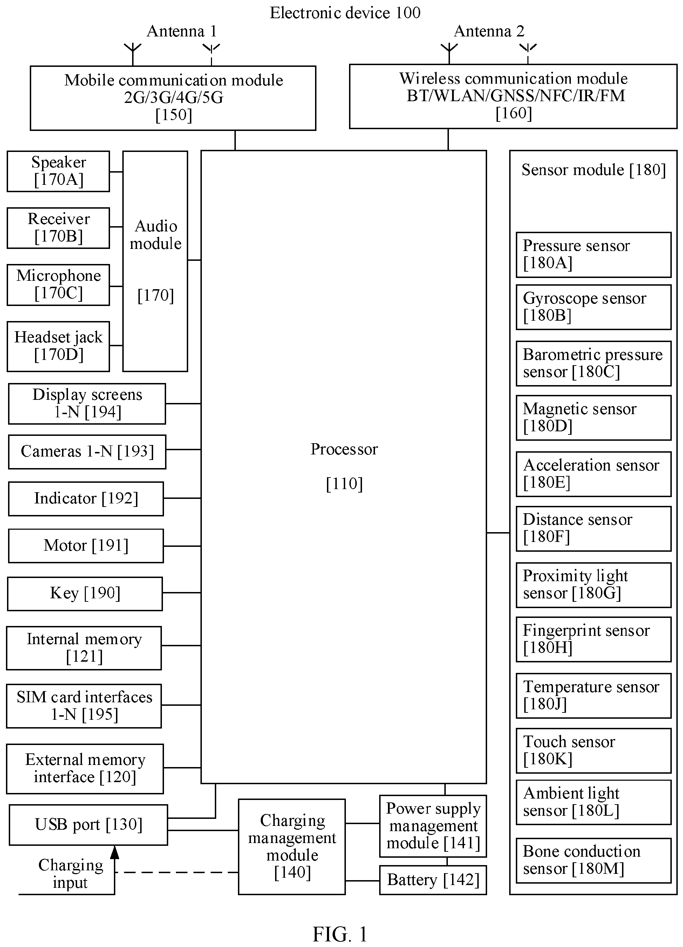

First, a structure of the electronic device is described. FIG. 1 is a schematic diagram of a structure of an electronic device according to an embodiment of this application.

The electronic device 100 may include a processor 110, an external memory interface 120, an internal memory 121, a universal serial bus (universal serial bus, USB) port 130, a charging management module 140, a power supply management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, a proximity light sensor 180G, a fingerprint sensor 180H, a temperature sensor 180J, a touch sensor 180K, an ambient light sensor 180L, a bone conduction sensor 180M, and the like.

It may be understood that a schematic structure in this embodiment of the present invention does not constitute a specific limitation on the electronic device 100. In some other embodiments of this application, the electronic device 100 may include more or fewer components than those shown in the figure, or some components may be combined, or some components may be divided, or different component arrangements may be used. The components shown in the figure may be implemented by hardware, software, or a combination of software and hardware. For example, a desktop computer device or an all-in-one computer device may not include the SIM card interface, an antenna group 1, and the mobile communication module, and a notebook computer may not include the antenna group 1 and the mobile communication module.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

The controller may generate an operation control signal based on instruction operation code and a timing signal, to control instruction fetching and instruction execution.

A memory configured to store instructions and data may be further disposed in the processor 110. In some embodiments, the memory in the processor 110 is a cache. The memory may store instructions or data recently used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

**The I2C interface** is a bidirectional synchronous serial bus, including a serial data line (serial data line, SDA) and a derail clock line (derail clock line, SCL). In some embodiments, the processor 110 may include a plurality of sets of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of sets of I2S buses. The processor 110 may be coupled to the audio module 170 through the I2S bus to implement communication between the processor 110 and the audio module 170. In some embodiments, the audio module 170 may transmit an audio signal to the wireless communication module 160 through the I2S interface, to implement a function of answering a call via a Bluetooth headset.

The PCM interface may also be used for audio communication to sample, quantize, and encode an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call via a Bluetooth headset. Both the I2S interface and the PCM interface may be used for audio communication.

The UART interface is a universal serial data bus used for asynchronous communication. The bus may be a bidirectional communication bus. The bus converts to-be-transmitted data between serial communication and parallel communication. In some embodiments, the UART interface is generally configured to be connected to the processor 110 and the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of music playback via a Bluetooth headset.

The MIPI interface may be configured to be connected to the processor 110 and a peripheral device, for example, the display screen 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display screen 194 through the DSI interface, to implement a display function of the electronic device 100.

**The GPIO interface** may be configured by software. The GPIO interface may be configured as a control signal or as a data signal. In some embodiments, the GPIO interface may be configured to be connected to the processor 110 and the camera 193, the display screen 194, the wireless communication module 160, the audio module 170, the sensor module 180, and the like. The GPIO interface may alternatively be configured as an I2C interface, an I2S interface, a UART interface, a MIPI interface, or the like.

The USB port 130 is a port that complies with a USB standard specification, and may be specifically a Mini USB port, a Micro USB port, a USB Type C port, or the like. The USB port 130 may be configured to be connected to a charger to charge the electronic device 100, or may be configured to transmit data between the electronic device 100 and a peripheral device, or may be configured to be connected to a headset to play back audio via the headset. The port may alternatively be configured to be connected to another electronic device, for example, an AR device.

The port may further include another port, for example, a Dock port or a Lighting port, configured to interact with another device.

It may be understood that an interface connection relationship between modules illustrated in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive charging input from a charger or provide a power supply for an external device. The charger may be a wireless charger or a wired charger. In some wired charging embodiments, the charging management module 140 may receive charging input from the wired charger through the USB port 130. In some wireless charging embodiments, the charging management module 140 may receive wireless charging input via a wireless charging coil of the electronic device 100. The charging management module 140 may further supply power to the electronic device by using the power supply management module 141 while charging the battery 142. For an electronic device in which a Type-C port is used, the charging management module 140 of the electronic device supports a USB power delivery (PD) charging protocol.

The power supply management module 141 is configured to be connected to the battery 142, the charging management module 140, and the processor 110. The power supply management module 141 receives input from the battery 142 and/or the charging management module 140, and supplies power to the processor 110, the internal memory 121, the display screen 194, the camera 193, the wireless communication module 160, and the like. The power supply management module 141 may be further configured to monitor a parameter like a battery capacity, a quantity of battery cycles, and a battery health state (electric leakage and impedance). In some other embodiments, the power supply management module 141 may alternatively be disposed in the processor 110. In some other embodiments, the power supply management module 141 and the charging management module 140 may alternatively be disposed in a same device.

The electronic device 100 implements a display function by using the GPU, the display screen 194, the application processor, and the like. The GPU is a microprocessor for image processing and is connected to the display screen 194 and the application processor. The GPU is configured to perform mathematical and geometric calculation for graphics rendering. The processor 110 may include one or more GPUs that execute program instructions to generate or change display information.

The display screen 194 is configured to display an image, a video, or the like. The display screen 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diode, QLED), or the like. In some embodiments, the electronic device 100 may include 1 or N display screens 194. N is a positive integer greater than 1.

The digital signal processor is configured to process a digital signal. In addition to processing a digital image signal, the digital signal processor may further process another digital signal. For example, when the electronic device 100 performs frequency selection, the digital signal processor is configured to perform Fourier transform and the like on frequency energy.

The video codec is configured to compress or decompress a digital video. The electronic device 100 supports one or more video codecs. In this way, the electronic device 100 may play back or record videos in a plurality of coding formats, for example, moving picture experts group (moving picture experts group, MPEG)1, MPEG2, MPEG3, and MPEG4.

The NPU is a neural-network (neural-network, NN) computing processor, and quickly processes input information with reference to a structure of a biological neural network, for example, a transfer mode between human brain neurons, and may further continuously perform self-learning. The NPU may be used to implement applications such as intelligent cognition of the electronic device 100, for example, image recognition, facial recognition, voice recognition, and text understanding.

The internal memory 121 may include one or more random access memories (random access memories, RAMs) and one or more non-volatile memories (non-volatile memories, NVMs).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM generally referred to as a DDR5 SDRAM), or the like. The non-volatile memory may include a magnetic disk storage device and a flash memory (flash memory).

According to division of an operating principle, the flash memory may include NOR FLASH, NAND FLASH, 3D NAND FLASH, and the like. According to division of potential levels of storage cells, the flash memory may include a single-level cell (single-level cell, SLC), a multi-level cell (multi-level cell, MLC), a triple-level cell (triple-level cell, TLC), a quad-level cell (quad-level cell, QLC), and the like. According to division of a storage specification, the flash memory may include universal flash storage (English: universal flash storage, UFS), an embedded multi media card (embedded multi media Card, eMMC), and the like.

The random access memory may be directly read and written by the processor 110, may be configured to store executable programs (for example, machine instructions) of an operating system or another running program, and may be configured to store data of a user and an application, and the like.

The non-volatile memory may also store executable programs, data of the user and the application, and the like, and may be loaded into the random access memory in advance, to be directly read and written by the processor 110.

The external memory interface 120 may be configured to be connected to an external non-volatile memory, to expand a storage capability of the electronic device 100. The external non-volatile memory communicates with the processor 110 through the external memory interface 120, to implement a data storage function. For example, a file like music or a video is stored in the external non-volatile memory.

A charging method and an electronic device provided in this application are described below by using a PD charging protocol and two Type-C ports as an example. It should be noted that the charging method provided in this application is also applicable to a device having two or more Type-C ports, and a protocol of a PD charging protocol type, for example, a charging protocol in which a CC signal is used for communication, a charging protocol in which a pin on the Type-C port is used for communication at a position corresponding to a CC signal, or a charging protocol in which a non-D +/D- signal defined by the Type-C port is used for communication.

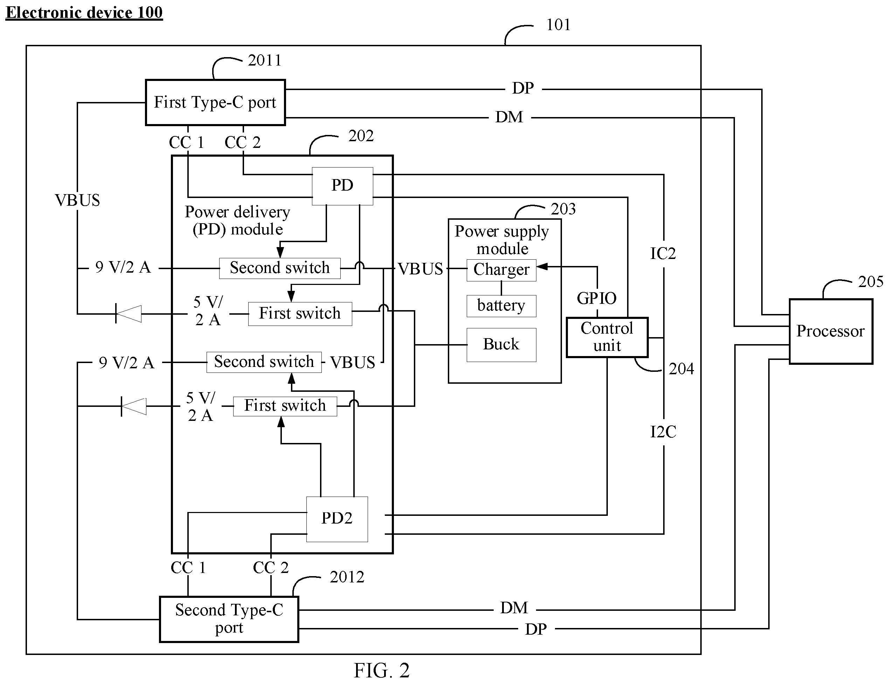

First, a structure of an electronic device 100 is described by taking the electronic device as, for example, a PC product. FIG. 2 is a schematic diagram of an architecture of an electronic device according to an embodiment of this application. The electronic device 100 may be used to implement the charging method provided in an embodiment of this application.

As shown in FIG. 2, the electronic device 100 includes a first charging circuit 101 and a processor 205. The first charging circuit 101 includes one or more of a first Type-C port 2011, a second Type-C port 2012, a power delivery module 202, a power supply module 203, and a control unit 204.

The first Type-C port 2011 and/or the second Type-C port 2012 are/is configured to be connected to an external device. When the electronic device 100 provides a power supply for the external device through the first Type-C port 2011 and/or the second Type-C port 2012, the electronic device is a charging port (represented by a Source), and the external device is a power consumption device port (represented by a Sink). It can be learned from FIG. 2 that the first Type-C port 2011 and/or the second Type-C port 2012 include/includes one or more of a VBUS pin, CC pins (including a CC 1 pin and a CC 2 pin), a DP (which may also be referred to as D+ or a data positive signal) pin, and a DM (which may also be referred to as D- or a data negative signal) pin that are configured to supply power.

The VBUS pin is a return path of a power supply, and a default VBUS voltage is 5 V. However, a standard allows a device to negotiate and select the VBUS voltage other than the default value, to support a larger voltage. A value of the supported VBUS voltage is not limited in this application.

The CC pin is configured to implement a configuration channel function defined in a USB Type-C specification and a function specified in a USB PD specification.

The DM pin and the DP pin are a differential pair used for USB2.0 connection, and a signal transmitted on the DM/DP pin may be used for identification of a private protocol.

The power delivery module 202 is, for example, a USB-PD charging protocol integrated circuit (integrated circuit, IC). The USB-PD charging protocol IC may be an IC that communicates a protocol through a CC channel defined by a Type-C port, and supports a PD charging protocol or a charging protocol similar to the PD charging protocol. The power delivery module 202 may further include one or more interfaces, for example, an I2C interface. A PD chip is electrically connected to an I2C interface of the control unit 204 through an I2C interface and an I2C bus, to implement an electrical connection between the power delivery module 202 and the control unit 204 as well as transmission between signals. For example, the PD chip may be electrically connected to the CC pin (the CC 1 pin/CC 2 pin) of the first Type-C port 2011 and/or the second Type-C port 2012, to identify, through a change of a voltage at the CC pin, an external device connected to the first Type-C port 2011 and/or the second Type-C port 2012.

In some embodiments, one or more first switches and one or more second switches are disposed in the power delivery module 202, the first Type-C port 2011 separately corresponds to the first switch and the second switch, and the second Type-C port 2012 separately corresponds to the first switch and the second switch. It may be understood that, when there are two or more USB Type-C ports, two or more first switches and two or more second switches are disposed in the power delivery module 202, and respectively correspond to different USB Type-C ports.

The power supply module 203 includes one or more of a charger (charger) chip, a battery, and a buck (buck) circuit.

The buck (buck) circuit is configured to output a voltage, for example, output a fixed voltage of 5 V to the power delivery module 202, to output, through a pin that is in the power delivery module 202 and that is electrically connected to the first switch, the voltage of 5 V to the VBUS pin of the first Type-C port 2011 and/or the VBUS pin of the second Type-C port 2012.

It should be noted that the first switch may be located inside the power delivery module 202 or outside the power delivery module 202, and the power delivery module 202 controls the first switch to be turned on or turned off, for example, controls whether to output the fixed voltage of 5 V to the VBUS pin of the first Type-C port 2011 and/or the second Type-C port 2012. For example, the first switch may be, for example, a switch chip having an over current protection (OCP) function. Certainly, the first switch is not limited to this, and any module that may have a turn-on or turn-off function and an over current protection function is within the protection scope of embodiments of this application.

The charger (charger) chip is electrically connected to the VBUS pin of the first Type-C port 2011 and/or the second Type-C port 2012 through the second switch, and is further separately connected to the battery and the control unit 204. When the first Type-C port 2011 and/or the second Type-C port 2012 is connected to a charging power supply, for example, an adapter or a mobile power pack, the power supply module 203 is configured to receive charging input through the second switch, charge the battery, and may further supply power to another module that needs power during working, so that positive charging of the electronic device is completed. In this embodiment, the power supply module 203 further has a power supply reverse output function, to be specific, a function of outputting a power supply to an external to-be-charged device. The power supply reverse output function may be implemented based on an on-the-go (on the go, OTG) function, and a voltage and a current reversely output by the power supply module 203 are adjustable.

For example, the second switch may be, for example, a switch chip having an overvoltage protection (OVP) function. Certainly, the second switch module 70 is not limited to this, and any module that may have a turn-on or turn-off function and an overvoltage protection function is within the protection scope of embodiments of this application. For example, the second switch may be controlled to be turned on or turned off by using the power delivery module 202, or the second switch may be controlled to be turned on or turned off by the control unit 204 through a GPIO interface. It may be understood that, when there are two or more USB Type-C ports, two or more second switches are disposed in the power supply module 203.

The control unit 204 may be a single-chip microcomputer, for example, a microcontroller unit (microcontroller unit, MCU) or an embedded controller (embedded controller, EC). In an implementation, the control unit 204 may alternatively be integrated into the processor 205. The control unit 204 mainly controls a power-on sequence and a keyboard, and processes work related to underlying hardware, for example, temperature measurement. The charging chip and the PD chip implement a function as an interface, and the like. The control unit 204 decompresses and includes software that independently runs, and stores the software in a non-volatile medium of the control unit 204.

In some embodiments, the control unit 204 may include one or more interfaces. The interface may include a general purpose input/output (GPIO) interface, an enhanced serial peripheral (enhanced serial peripheral, eSPI) interface, an integrated circuit I2C interface, or the like. An electrical connection to another module of the electronic device 100 and communication between modules are implemented through the foregoing interface. In this embodiment of this application, for example, the control unit 204 may be electrically connected to and communicate with the power delivery module 202 through different I2C interfaces, and electrically connected to and communicate with the power supply module 203 through the GPIO interface.

It should be understood that the components shown in FIG. 2 may be implemented by hardware, software, or a combination of hardware and software including one or more signal processing and/or application-specific integrated circuits.

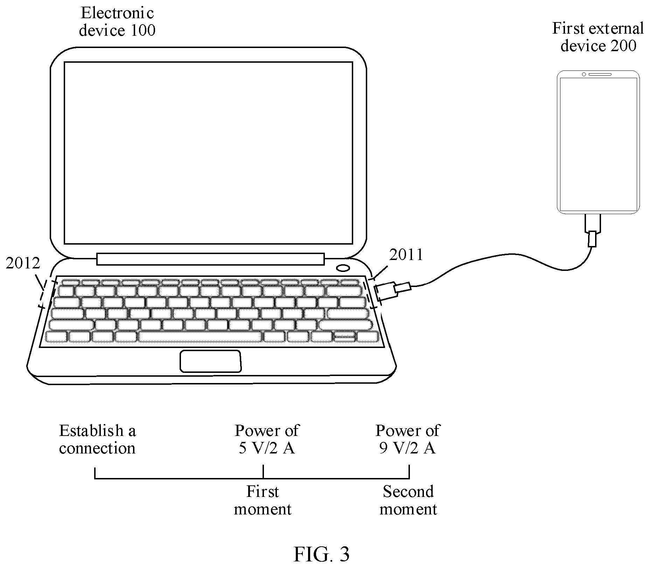

Next, a schematic diagram of a scenario provided in this application is introduced. FIG. 3 is a schematic diagram of a charging scenario of a single Type-C port based on a first charging circuit according to an embodiment of this application.

In the scenario shown in FIG. 3, an electronic device 100 is a notebook computer, and is configured with two Type-C ports: a first Type-C port 2011 and a second Type-C port 2012. The electronic device 100 may establish a connection to a first external device 200 (for example, a mobile phone) through one of the two Type-C ports (for example, the first Type-C port 2011). At a first moment after the connection is established, the electronic device 100 confirms that the electronic device 100 is a Source device, and the connected first external device 200 is a Sink device. First, the electronic device 100 may provide power of, for example, 5 V/2 A (that is, 10 W), for the first external device 200. At a second moment after the first moment, the first external device 200 confirms that the first external device 200 supports a protocol with higher power, for example, a PD3.0 protocol or a PD2.0 protocol, and the first external device 200 requests higher power, for example, 9 V/2 A (that is, 18 W), from the electronic device 100. After the electronic device 100 receives a request from the first external device 200, if a system of the electronic device 100 is not in an S0 state and a battery level is not less than a preset threshold, the electronic device 100 provides higher charging power (for example, 18 W) for the first external device 200. Therefore, at the second moment, fast charging at power of, for example, 9 V/2 A (that is, 18 W), may be performed on the first external device 200.

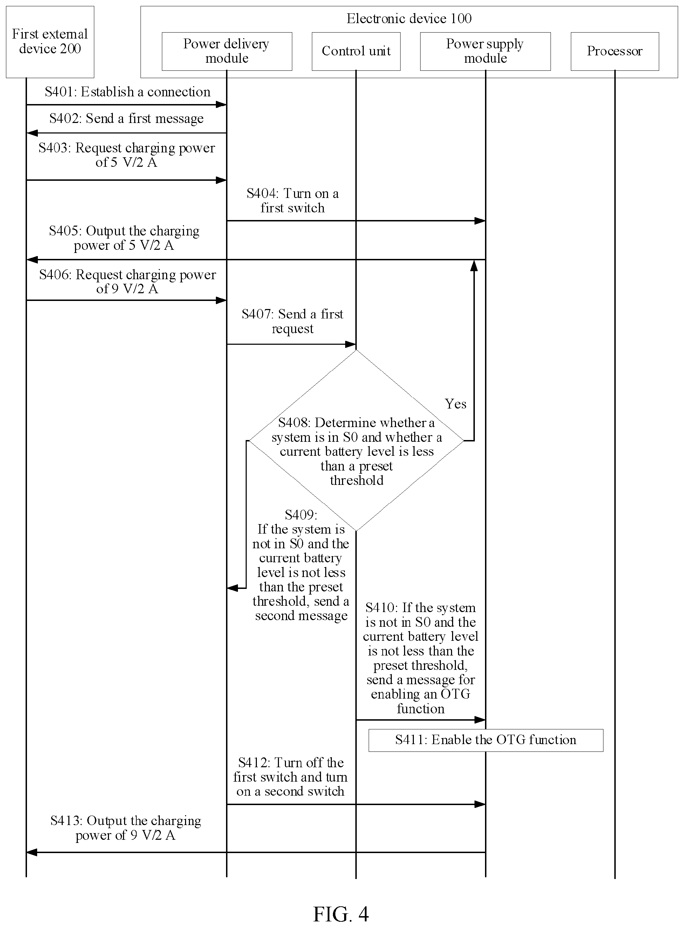

FIG. 4 is a schematic flowchart of a charging scenario of a single Type-C port based on a first charging circuit, including but not limited to the following steps. For ease of description in this application, the following sequence is used for description, and it is not intended to limit the steps to be performed in the sequence. A sequence of performing the foregoing one or more steps, time of performing the foregoing one or more steps, a quantity of times of performing the foregoing one or more steps, and the like are not limited in embodiments of this application.

S401: A first external device 200 establishes a connection to a power delivery module in an electronic device 100.

Specifically, when the first external device 200 is connected to the electronic device 100 through a first Type-C port (which may be briefly referred to as that the first external device 200 is connected to a Type-C port), the power delivery module 202 in the electronic device 100 and the first external device 200 perform handshake through a CC pin of the Type-C port, and confirm that the electronic device 100 is a Source device, and the connected first external device 200 is a Sink device.

S402: The power delivery module sends a first message to the first external device 200.

Specifically, the electronic device 100 used as the Source device sends, by using the power delivery module, the first message to the first external device 200 used as the Sink device. The first message includes one or more charging power of 5 V/2 A and 9 V/2 A that can be provided by the electronic device 100. It may be understood that these values may alternatively be replaced with other values, and may be values corresponding to an interaction result determined after a protocol interaction is performed between the electronic device and the first external device.

S403: The first external device 200 requests charging power of 5 V/2 A from the power delivery module.

S404: The power delivery module turns on a first switch.

Turning on the first switch means controlling the first switch to be turned on. Specifically, it can be learned from FIG. 3 that the power delivery module may control the first switch to be turned on or turned off, and the first switch is electrically connected to a buck circuit in a power supply module, to control, through the first switch, whether to output a voltage of 5 V output by the buck circuit to the power delivery module.

S405: The power supply module outputs the charging power of 5 V/2 A.

Specifically, the buck circuit in the voltage module is configured to output the voltage of 5 V. When the first switch is turned on, the power supply module outputs, through a pin that is in the power delivery module and that is electrically connected to the first switch, the voltage of 5 V to a VBUS pin of a USB Type-C port, to provide the charging power of 5 V/2 A for the first external device 200.

S406: The first external device 200 requests charging power of 9 V/2 A from the power delivery module.

Specifically, when the first external device 200 supports a fast charging protocol, for example, PD3.0 or PD2.0, the first external device 200 requests the charging power of 9 V/2 A from the power delivery module.

S407: The power delivery module sends a first request to a control unit.

Specifically, after receiving the request from the first external device 200 used as the Sink device, the power delivery module sends the first request for enabling (enable) an OTG function to the control unit through an I2C interface.

S408: The control unit determines whether a system is in S0 and whether a current battery level is less than a preset threshold.

Specifically, after receiving the request for enabling the OTG function, the control unit needs to ensure power supply of the control unit, and provides a power supply externally while ensuring the power supply of the control unit. Therefore, the control unit determines whether the current system of the electronic device 100 is in the S0 state and whether the battery level is less than the preset threshold (for example, 20%).

Therefore, when it is determined that the current system of the electronic device 100 is in the S0 state and the battery level is less than the preset threshold, the charging power of 5 V/2 A continues to be provided for the external device.

S409: If the system is not in S0 and the current battery level is not less than the preset threshold, the control unit sends a second message to the power delivery module.

Specifically, if it is determined that the current system of the electronic device 100 is not in the S0 state and the circuit of the battery is greater than or equal to the preset threshold, the control unit sends, to the power delivery module, the second message indicating that the OTG function can be enabled.

S410: If the system is not in S0 and the current battery level is not less than the preset threshold, the control unit sends, to the power supply module, a message for enabling the OTG function.

S411: The power supply module enables the OTG function.

S412: The power delivery module turns off the first switch and turns on a second switch.

Specifically, after receiving the second message, the power delivery module turns off the first switch, so that the first switch is in an off state, to disable an OCP function of the power supply module and stop outputting the charging power of 5 V/2 A. The second switch is turned on, to enable the OVG function of the power supply module 203, and a related register of the power supply module 203 is configured to reversely output a current and voltage of, for example, 9 V/2 A.

S413: The power supply module outputs the charging power of 9 V/2 A to the first external device 200.

Specifically, it can be learned from FIG. 3 that a charger (charger) chip in the power supply module is electrically connected to the VBUS pin of the USB Type-C port through the second switch, and is further separately connected to a battery. Therefore, the power supply module may provide the charging power of 9 V/2 A for the first external device 200 through the charger chip and the battery.

It can be learned that the electronic device may negotiate with the first external device to determine different charging power, to meet a requirement of outputting higher charging power to the first external device.

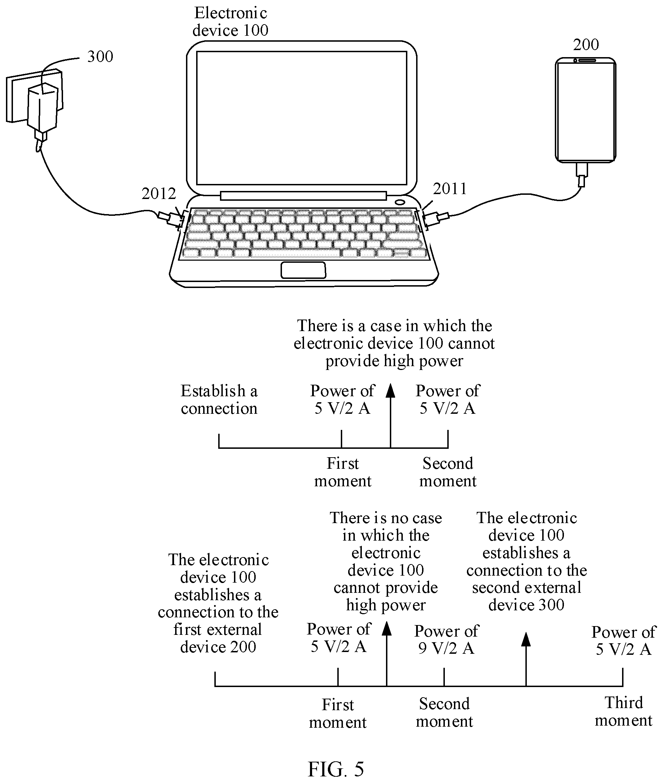

FIG. 5 is a schematic diagram of a charging scenario of dual Type-C ports based on a first charging circuit according to an embodiment of this application. As shown in FIG. 5, an electronic device 100 is configured with two Type-C ports, which are respectively a first Type-C port 2011 and a second Type-C port 2012. The electronic device 100 may establish a connection to a first external device 200 (for example, a mobile phone) through the first Type-C port, and may establish a connection to a second external device 300 (for example, a charger) through the second Type-C port 2012.

As shown in FIG. 5, at a first moment after the electronic device 100 establishes the connection to the first external device 200 through the first Type-C port 2011, the electronic device 100 confirms that the electronic device 100 is a Source device, and the connected first external device 200 is a Sink device. First, the electronic device 100 may provide power of, for example, 5 V/2 A (that is, 10 W), for the first external device 200.

After the first moment, the first external device 200 confirms that the first external device 200 supports a protocol with higher power, for example, a PD3.0 protocol or a PD2.0 protocol, and the first external device 200 requests higher power, for example, 9 V/2 A (that is, 18 W), from the electronic device 100. After receiving a request from the first external device 200, the electronic device 100 determines whether there are the following cases in which high power cannot be provided. Case 1: Whether the second Type-C port 2012 is connected to the second external device 300 (for example, a charger), and the electronic device 100 is identified as the Sink. Case 2: Whether a system of the electronic device 100 is in an S0 state and a battery level is not less than a preset threshold. If there are one or more of the foregoing cases, the request of the first external device 200 is rejected, and the electronic device 100 continues to output charging of 5 V/2 A. Therefore, at a second moment after the first moment, the first external device 200 continues to be charged at the power of 5 V/2 A.

If there is none of the foregoing cases, after receiving the request from the first external device 200, the electronic device 100 provides power of 9 V/2 A (that is, 18 W) for the first external device 200. Therefore, at the second moment, fast charging at the power of 9 V/2 A (that is, 18 W) may be performed on the first external device 200.

When the electronic device 100 outputs the power of 9 V/2 A (that is, 18 W) to the first external device 200, the electronic device 100 establishes the connection to the second external device 300 (for example, a charger). When the electronic device 100 is used as a Sink device, and the second external device 300 (for example, the charger) is used as a Source device, the electronic device 100 stops outputting the power of 9 V/2 A (that is, 18 W), and starts outputting the power of 5 V/2 A (that is, 10 W). Therefore, at a third moment after the second moment, the first external device 200 restores being charged at the power of 5 V/2 A.

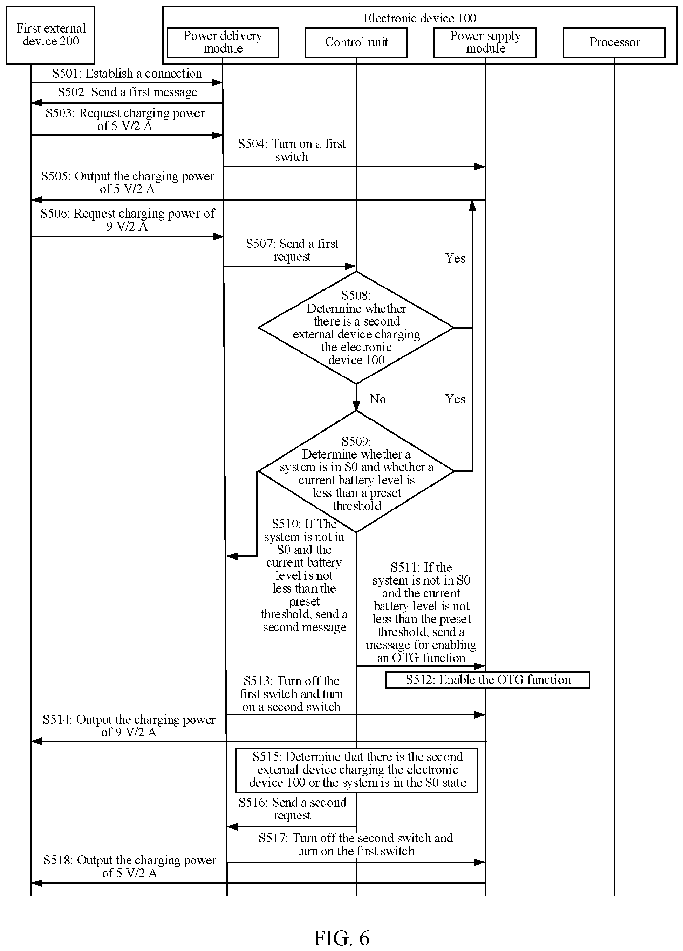

FIG. 6 is a schematic flowchart of a charging scenario of dual Type-C ports based on a first charging circuit, including but not limited to the following steps. For ease of description in this application, the following sequence is used for description, and it is not intended to limit the steps to be performed in the sequence. A sequence of performing the foregoing one or more steps, time of performing the foregoing one or more steps, a quantity of times of performing the foregoing one or more steps, and the like are not limited in embodiments of this application.

S501: A first external device 200 establishes a connection to a power delivery module in an electronic device 100.

Specifically, when the first external device 200 is connected to a first Type-C port 2011, a power delivery module 202 in the electronic device 100 and the first external device 200 perform handshake through a CC pin of the first Type-C port 2011, and confirm that the electronic device 100 is a Source device, and the connected first external device 200 is a Sink device.

S502: The power delivery module sends a first message to the first external device 200.

Specifically, the electronic device 100 used as the Source device sends, by using the power delivery module, the first message to the first external device 200 used as the Sink device. The first message includes one or more charging power of 5 V/2 A and 9 V/2 A that can be provided by the electronic device 100.

S503: The first external device 200 requests charging power of 5 V/2 A from the power delivery module.

S504: The power delivery module turns on a first switch.

Specifically, it can be learned from FIG. 3 that the power delivery module may control the first switch to be turned on or turned off, and the first switch is electrically connected to a buck circuit in a power supply module, to control, through the first switch, whether to output a voltage of 5 V output by the buck circuit to the power delivery module.

S505: The power supply module outputs the charging power of 5 V/2 A.

Specifically, the buck circuit in the voltage module is configured to output the voltage of 5 V. When the first switch is turned on, the power supply module outputs, through a pin that is in the power delivery module and that is electrically connected to the first switch, the voltage of 5 V to a VBUS pin of a USB Type-C port, to provide the charging power of 5 V/2 A for the first external device 200.

S506: The first external device 200 requests charging power of 9 V/2 A from the power delivery module.

Specifically, when the first external device 200 supports a fast charging protocol, for example, PD3.0 or PD2.0, the first external device 200 requests the charging power of 9 V/2 A from the power delivery module.

S507: The power delivery module sends a first request to a control unit.

Specifically, after receiving the request from the first external device 200 used as the Sink device, the power delivery module sends, to the control unit through an I2C interface, the first request for enabling (enable) an OTG function.

S508: The control unit determines whether there is a second external device charging the electronic device 100.

Specifically, the electronic device 100 has two or more Type-C ports. When the second external device is connected to a second Type-C port 2012, the power delivery module 202 in the electronic device 100 and the second external device 300 perform handshake through a CC pin of the second Type-C port 2012, and determine whether the electronic device 100 is a Source device, and the connected second external device is a Sink device.

If the electronic device 100 determines that the electronic device 100 is the Sink device and the connected second external device is the Source device, the electronic device 100 determines that the second Type-C port 2012 is in a state of charging the electronic device 100, and the electronic device 100 continues to provide the charging power of 5 V/2 A for the external device.

If it is determined that the second external device does not charge the electronic device through the second Type-C port, step S509 is performed.

S509: The control unit determines whether a system is in S0 and whether a current battery level is less than a preset threshold.

Specifically, after receiving the request for enabling the OTG function, the control unit needs to ensure power supply of the control unit, and provides a power supply externally while ensuring the power supply of the control unit. Therefore, the control unit determines whether the current system of the electronic device 100 is in the S0 state and whether the battery level is less than the preset threshold (for example, 20%).

Therefore, when it is determined that the current system of the electronic device 100 is in the S0 state and the battery level is less than the preset threshold, the charging power of 5 V/2 A continues to be provided for the external device.

When it is determined that the current system of the electronic device 100 is not in the S0 state and the circuit of the battery is greater than or equal to the preset threshold, step S510 is performed.

S510: The control unit sends a second message to the power delivery module.

Specifically, if it is determined that there is no second external device to charge the electronic device 100 through the Type-C port, the current system of the electronic device 100 is not in the S0 state, and the circuit of the battery is greater than or equal to the preset threshold, the control unit sends, to the power delivery module, the second message indicating that the OTG function can be enabled.

S511: If the system is not in S0 and the current battery level is not less than the preset threshold, the control unit sends, to the power supply module, a message for enabling the OTG function.

S512: The power supply module enables the OTG function.

S513: The power delivery module turns off the first switch and turns on a second switch.

Specifically, after receiving the second message, the power delivery module turns off the first switch, so that the first switch is in an off state, to disable an OCP function of the power supply module and stop outputting the charging power of 5 V/2 A. The second switch is turned on, to enable the OVG function of the power supply module 203, and a related register of the power supply module 203 is configured to reversely output a current and voltage of, for example, 9 V/2 A.

S514: The power supply module provides the charging power of 9 V/2 A for the first external device 200.

Specifically, it can be learned from FIG. 3 that a charger (charger) chip in the power supply module is electrically connected to the VBUS pin of the USB Type-C port through the second switch, and is further separately connected to a battery. Therefore, the power supply module may provide the charging power of 9 V/2 A for the first external device 200 through the charger chip and the battery.

S515: The control unit determines that there is the second external device charging the electronic device 100 or the system is in the S0 state.

S516: The control unit sends a second request to the power delivery module.

Specifically, the second request is used to request the power delivery module to turn off the second switch and turn on the first switch.

S517: The power delivery module turns off the second switch and turns on the first switch.

S518: The power supply module outputs the charging power of 5 V/2 A to the first external device 200.

Specifically, the power supply module stops outputting the charging power of 9 V/2 A and restores outputting the charging power of 5 V/2 A.

It can be learned that the electronic device may negotiate with the first external device to determine different charging power, to meet a requirement of outputting higher charging power to the first external device. When there is another USB port (for example, the second Type-C port) charging the electronic device, to ensure stable performance of the electronic device, the electronic device may stop outputting higher charging power to the first external device and normal charging power is restored.

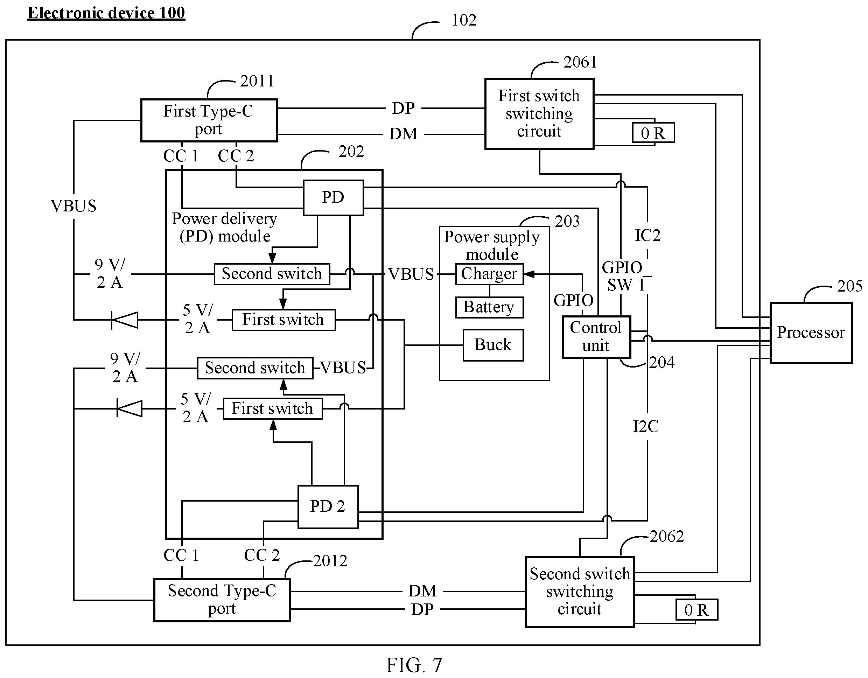

FIG. 7 is a schematic diagram of an architecture of another electronic device according to an embodiment of this application. As shown in FIG. 6, an electronic device 100 includes a second charging circuit 102 and a processor 205. The second charging circuit 102 includes one or more of a first Type-C port 2011, a second Type-C port 2012, a power delivery module 202, a power supply module 203, a control unit 204, a first switch switching circuit 2061, and a second switch switching circuit 2062.

The first switch switching circuit 2061 corresponds to the first Type-C port 2011. The first switch switching circuit 2061 is separately connected to the first Type-C port 2011, the control unit 204, and the processor 205, and a 0-ohm (R) resistor is short-circuited on the first switch switching circuit 2061.

In some embodiments, the control unit 204 may control the first switch switching circuit 2061 to respectively switch a DP signal line and a DM signal line that are connected to the first Type-C port 2011 to lines connected to the processor 205. In this way, the first Type-C port 2011 is connected to the processor 205 through the first switch switching circuit 2061. When an external device is connected to the electronic device 100 through the first Type-C port 2011, USB2.0 identification may be performed. In other words, the electronic device 100 may perform data transmission with the external device through the first Type-C port 2011.

In some embodiments, the control unit 204 may control the first switch switching circuit 2061 to respectively switch the DP signal line and the DM signal line that are connected to the first Type-C port 2011 to lines connected to the 0 ohm (R).

The second switch switching circuit 2062 corresponds to the second Type-C port 2012. The second switch switching circuit 2062 is separately connected to the second Type-C port 2012, the control unit 204, and the processor 205, and a 0-ohm (R) resistor is short-circuited on the second switch switching circuit 2062.

In some embodiments, the control unit 204 may control the second switch switching circuit 2062 to respectively switch the DP signal line and the DM signal line that are connected to the second Type-C port 2012 to lines connected to the processor 205. In this way, the second Type-C port 2012 is connected to the processor 205 through the second switch switching circuit 2062. When the external device is connected to the electronic device 100 through the second Type-C port 2012, USB2.0 identification may be performed. In other words, the electronic device 100 may perform data transmission with the external device through the second Type-C port 2012.

In some embodiments, the control unit 204 may control the first switch switching circuit 2061 to respectively switch the DP signal line and the DM signal line that are connected to the first Type-C port 2011 to lines connected to the 0 ohm (R).

For related descriptions of the first Type-C port 2011, the second Type-C port 2012, the power delivery module 202, the power supply module 203, and the control unit 204 in FIG. 6, refer to FIG. 2, and details are not described herein again.

It should be noted that a quantity of switch switching circuits is consistent with a quantity of Type-C ports. This application is described by using two Type-C ports as an example, but is not limited to two Type-C ports and two switch switching circuits.

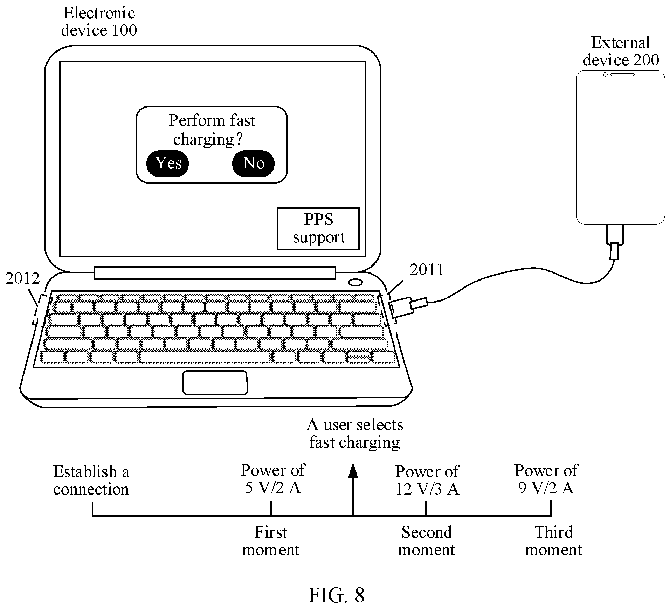

FIG. 8 is a schematic diagram of a charging scenario of a single Type-C port based on a second charging circuit according to an embodiment of this application. The second charging circuit is the second charging circuit 102 shown in FIG. 7. In the scenario shown in FIG. 8, an electronic device 100 is in a powered-on state and/or a sleep state.

As shown in FIG. 8, the electronic device 100 is a notebook computer, and is configured with two Type-C ports: a first Type-C port 2011 and a second Type-C port 2012. The electronic device 100 may establish a connection to a first external device 200 (for example, a mobile phone) through one of the two Type-C ports (for example, the first Type-C port 2011). After establishing the connection, the electronic device 100 confirms that the electronic device 100 is a Source device, and the connected first external device 200 is a Sink device. The electronic device 100 may broadcast, to the first external device 200, charging power provided by the electronic device 100, and display PPS support in a manner of, for example, a pop-up window, and at a first moment, the first external device 200 may prioritize requesting 5 V/2 A. Therefore, at the first moment, the electronic device 100 provides power of, for example, 5 V/2 A (that is, 10 W), for the first external device 200, and the electronic device 100 may perform data transmission with the first external device 200.

It can be learned from FIG. 8 that, after establishing the connection, the electronic device 100 may display "Perform fast charging?" in a pop-up window, to prompt a user whether to select fast charging. If the user selects a "No" option, the electronic device 100 determines, in response to a user operation of a "No" functional control, that the user does not select fast charging, and therefore maintains current charging power unchanged. If the user selects a "Yes" option, the electronic device 100 determines, in response to a user operation of a "Yes" functional control, that the user selects fast charging, and therefore provides charging power higher than 5 V/2 A for the first external device 200. For example, at a second moment, fast charging at power of 12 V/3 A (that is, 36 W) may be performed on the first external device 200.

After the second moment, the electronic device 100 may adjust, in real time, charging power delivered to the first external device 200. For example, at a third moment, fast charging at power of 9 V/2 A (that is, 18 W) may be performed on the first external device 200.

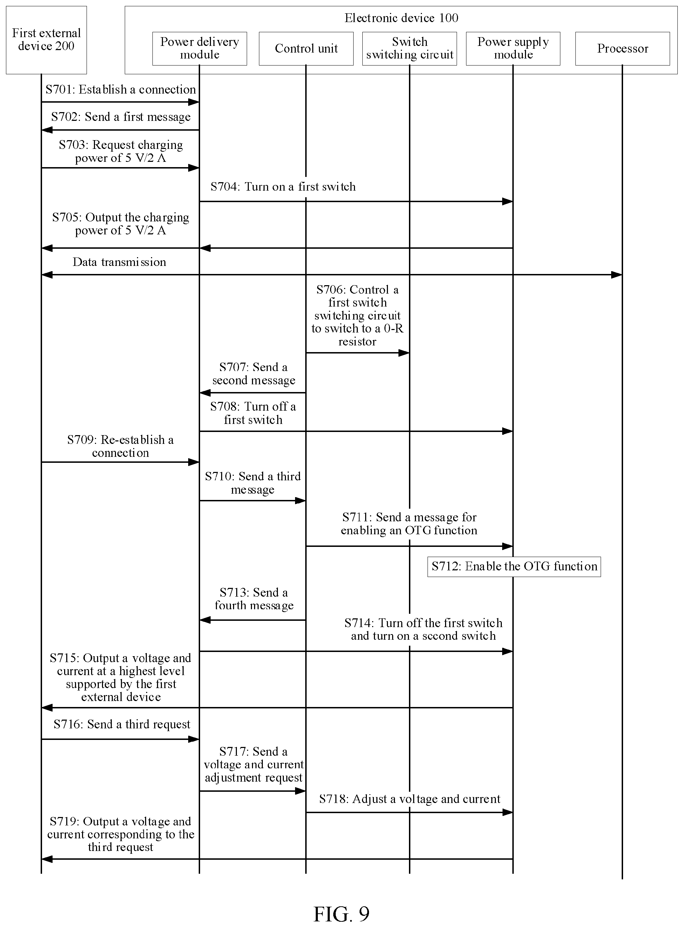

FIG. 9 is a schematic flowchart of a charging scenario of a single Type-C port based on a second charging circuit, including but not limited to the following steps. For ease of description in this application, the following sequence is used for description, and it is not intended to limit the steps to be performed in the sequence. A sequence of performing the foregoing one or more steps, time of performing the foregoing one or more steps, a quantity of times of performing the foregoing one or more steps, and the like are not limited in embodiments of this application.

It can be learned from FIG. 7 that, an electronic device may control, by using a control unit, a switch switching circuit to switch to a processor port. In this way, after an external device is connected to the electronic device through a Type-C port, it may be determined, based on a USB2.0 protocol, that the external device is an SDP port. When the electronic device 100 is in a powered-on state and/or a sleep state, the control unit defaults to switching a first switch switching circuit 2061 to the processor port.

S701: A first external device 200 establishes a connection to a power delivery module in the electronic device 100.

Specifically, when the first external device 200 is connected to a Type-C port, a power delivery module 202 in the electronic device 100 and the first external device 200 perform handshake through a CC pin of the Type-C port, and confirm that the electronic device 100 is a Source device, and the connected first external device 200 is a Sink device.

S702: The power delivery module sends a first message to the first external device 200.

Specifically, the electronic device 100 used as the Source device sends, by using the power delivery module, the first message to the first external device 200 used as the Sink device. The first message includes one or more charging power of 5 V/2 A, 9 V/2 A, 12 V/2 A, 15 V/3 A, 20 V/3.5, and the like that can be provided by the electronic device 100, and programmable power supply (PPS) support may be displayed. It should be noted that a voltage and current provided by the electronic device 100 is not limited to that provided in embodiments of this application, and a higher or lower voltage and current may be provided.

S703: The first external device 200 requests charging power of 5 V/2 A from the power delivery module.

S704: The power delivery module turns on a first switch.

Specifically, it can be learned from FIG. 7 that the power delivery module may control the first switch to be turned on or turned off, and the first switch is electrically connected to a buck circuit in a power supply module, to control, through the first switch, whether to output a voltage of 5 V output by the buck circuit to the power delivery module.

S705: The power supply module outputs the charging power of 5 V/2 A.

Specifically, the buck circuit in the voltage module is configured to output the voltage of 5 V. When the first switch is turned on, the power supply module outputs, through a pin that is in the power delivery module and that is electrically connected to the first switch, the voltage of 5 V to a VBUS pin of a USB Type-C port, to provide the charging power of 5 V/2 A for the first external device 200.

When the electronic device 100 is in the powered-on state and/or the sleep state, the electronic device may control, by using the control unit, the switch switching circuit to be switched to the processor port. Therefore, after the electronic device establishes the connection to the external device, it may be confirmed, based on a BC1.2 protocol, that the electronic device is the SDP port, to support a function of performing data transmission with the external device.

S706: The control unit controls the first switch switching circuit to switch to a 0-R resistor.

Specifically, in a UI interface of the electronic device, a user is prompted, in a manner of a pop-up window, whether to select fast charging. If the user selects fast charging, the control unit controls the first control switch switching circuit to switch from the processor port to a 0-R resistor port. It can be learned from FIG. 6 that, after the 0-R resistor segment is switched to, the first Type-C port is disconnected from the processor. If the user does not select fast charging, the electronic device continues to output the charging power of 5 V/2 A.

S707: The control unit sends a second message to the power delivery module.

Specifically, the second message is used to notify the power delivery module to turn off the first switch.

S708: The power delivery module turns off the first switch.

Specifically, the power delivery module turns off the first switch in response to the second message.

S709: The first external device re-establishes a connection to the power delivery module.

Specifically, after the power delivery module disables an OCP function by turning off the first switch, the first external device may re-establish a connection to the electronic device. For example, the electronic device is identified as a DCP port based on BC1.2 through the Type-C port.

S710: The power delivery module sends a third message to the control unit.

Specifically, after the electronic device establishes the connection to the first external device based on BC1.2, the first external device requests, from the power delivery module, a charging capability at a highest level supported by the first external device, and the power delivery module sends the third message to the control unit through an I2C. The third message is used to request a voltage and current at a highest level supported by the first external device.

S711: The control unit sends, to the power supply module, a message for enabling an OTG function.

Specifically, the control unit configures an OTG voltage and current of a charger chip in the power supply module based on a requirement from the power delivery module, and enables the OTG function.

S712: The power supply module enables the OTG function.

Specifically, the power supply module enables the OTG function based on configuration of the control unit.

S713: The control unit sends a fourth message to the power delivery module.

The fourth message indicates that configuration of the OTG function is completed.

S714: The power delivery module turns off the first switch and turns on a second switch.

Specifically, after receiving the message indicating that the configuration of the OTG function is completed, the power delivery module turns on the second switch and turns off the first switch.

S715: The power supply module outputs the voltage and current at the highest level supported by the first external device.

Specifically, after the second switch is turned on, the power supply module may output, through the charger chip to the first external device, the voltage and current at the highest level requested by the first external device.

S716: The first external device sends a third request to the power delivery module.

Specifically, the first external device may send the third request, for example, get PPS state, to the electronic device. The third request is used to request to adjust a voltage and current.

S717: The power delivery module sends a voltage and current adjustment request to the control unit.

S718: The control unit adjusts the voltage and current.

Specifically, the control unit adjusts the OTG voltage and current of the charger chip in the power supply module in real time based on a requirement of the power delivery module.

S719: The power supply module outputs a voltage and current corresponding to the third request to the first external device.

In some embodiments, after the first external device is disconnected from the electronic device, the power delivery module turns off the second switch, and sends, to the control unit, a message for turning off the second switch. The control unit controls the first switch switching circuit to switch to the processor port, to wait for a next connection of the external device.

It can be learned that in a power-on scenario and/or a sleep scenario, the control unit in the electronic device controls, by default, the switch switching circuit to switch to the processor port. Therefore, after the first external device is connected to the electronic device, the electronic device may perform data transmission based on USB2.0, or may output normal charging power to the first external device. When the first external device has a fast charging requirement, the electronic device responds to the requirement of the first external device and the switch switching circuit is switched to be short-circuited to the 0-ohm. Therefore, the electronic device is identified as a DCP port. After the first external device identifies the electronic device as the DCP port, some charging levels of a PD protocol and a PPS may be supported.

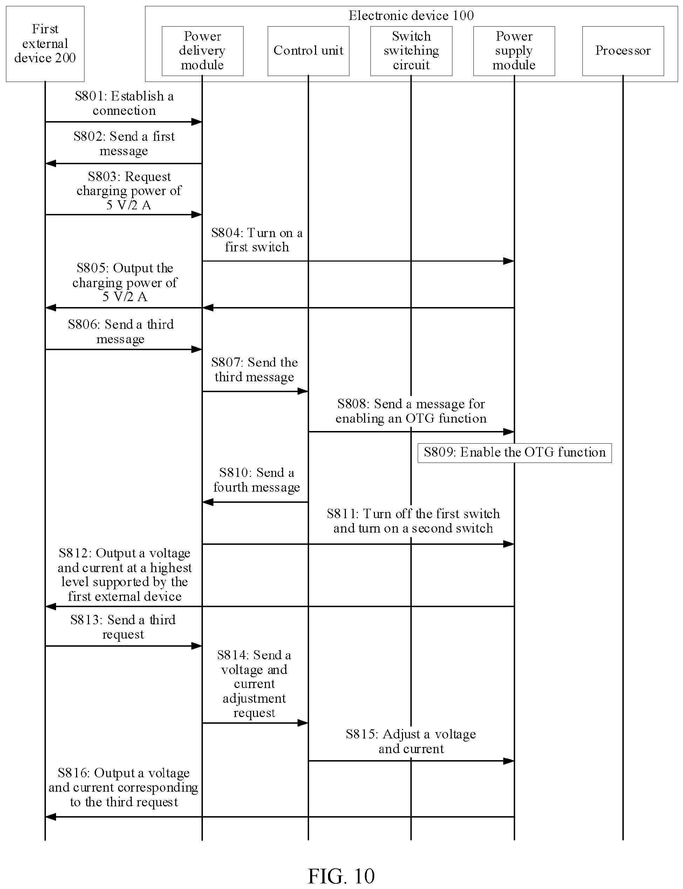

FIG. 10 is a schematic flowchart of another charging scenario of a single Type-C port based on a second charging circuit, including but not limited to the following steps. For ease of description in this application, the following sequence is used for description, and it is not intended to limit the steps to be performed in the sequence. A sequence of performing the foregoing one or more steps, time of performing the foregoing one or more steps, a quantity of times of performing the foregoing one or more steps, and the like are not limited in embodiments of this application.

It can be learned from FIG. 7 that, an electronic device may control, by using a control unit, a switch switching circuit to switch to be short-circuited to a 0 R. In this way, after an external device is connected to the electronic device through a Type-C port, it may be determined, based on a BC1.2 protocol, that the external device is a DCP port. When the electronic device 100 is in a powered-off state, the control unit defaults to switching a first switch switching circuit 2061 to be short-circuited to the 0 R.

S801: A first external device 200 establishes a connection to a power delivery module in the electronic device 100.

Specifically, when the first external device 200 is connected to a first Type-C port, the power delivery module 202 in the electronic device 100 and the first external device 200 perform handshake through a CC pin of the Type-C port, and confirm that the electronic device 100 is a Source device, and the connected first external device 200 is a Sink device.

S802: The power delivery module sends a first message to the first external device 200.

Specifically, the electronic device 100 used as the Source device sends, by using the power delivery module, the first message to the first external device 200 used as the Sink device. The first message includes one or more charging power of 5 V/2 A, 9 V/2 A, 12 V/2 A, 15 V/3 A, 20 V/3.5, and the like that can be provided by the electronic device 100, and programmable power supply (PPS) support may be displayed. It should be noted that a voltage and current provided by the electronic device 100 is not limited to that provided in embodiments of this application, and a higher or lower voltage and current may be provided.

S803: The first external device 200 requests charging power of 5 V/2 A from the power delivery module.

S804: The power delivery module turns on a first switch.

Specifically, it can be learned from FIG. 6 that the power delivery module may control the first switch to be turned on or turned off, and the first switch is electrically connected to a buck circuit in a power supply module, to control, through the first switch, whether to output a voltage of 5 V output by the buck circuit to the power delivery module. When the electronic device 100 is in a powered-on state and/or a sleep state, the electronic device may control, by using the control unit, the switch switching circuit to be switched to a processor port. Therefore, after the electronic device establishes the connection to the external device, it may be confirmed, based on USB2.0, that the electronic device is an SDP port, to support a function of performing data transmission with the external device.

S805: The power supply module outputs the charging power of 5 V/2 A.

Specifically, the buck circuit in the voltage module is configured to output the voltage of 5 V. When the first switch is turned on, the power supply module outputs, through a pin that is in the power delivery module and that is electrically connected to the first switch, the voltage of 5 V to a VBUS pin of a USB Type-C port, to provide the charging power of 5 V/2 A for the first external device 200.

In addition, based on USB2.0, the electronic device is identified as the DCP port, and may perform voltage and current adjustment and PPS adjustment.

S806: The first external device sends a third message to the power delivery module.

The third message is used to request, from the electronic device, a voltage and current at a highest level supported by the first external device, for example, 12 V/2 A.

S807: The power delivery module sends a third message to the control unit.

Specifically, the power delivery module sends the third message to the control unit through an I2C. The third message is used to request the control unit to configure the voltage and current at the highest level supported by the first external device.

S808: The control unit sends, to the power supply module, a message for enabling an OTG function.

Specifically, the control unit configures an OTG voltage and current of a charger chip in the power supply module based on a requirement from the power delivery module, and enables the OTG function.

S809: The power supply module enables the OTG function.

Specifically, the power supply module enables the OTG function based on configuration of the control unit.

S810: The control unit sends a fourth message to the power delivery module.

The fourth message indicates that configuration of the OTG function is completed.

S811: The power delivery module turns off the first switch and turns on a second switch.

Specifically, after receiving the message indicating that the configuration of the OTG function is completed, the power delivery module turns on the second switch and turns off the first switch.

S812: The power supply module outputs the voltage and current at the highest level supported by the first external device.

Specifically, after the second switch is turned on, the power supply module may output, through the charger chip to the first external device, the voltage and current at the highest level requested by the first external device.

S813: The first external device sends a third request to the power delivery module.

Specifically, the first external device may send the third request, for example, get PPS state, to the electronic device. The third request is used to request to adjust a voltage and current.

S814: The power delivery module sends a voltage and current adjustment request to the control unit.

S815: The control unit adjusts the voltage and current.

Specifically, the control unit adjusts the OTG voltage and current of the charger chip in the power supply module in real time based on a requirement of the power delivery module.

S816: The power supply module outputs a voltage and current corresponding to the third request to the first external device.

In some embodiments, after the first external device is disconnected from the electronic device, the power delivery module turns off the second switch, and sends, to the control unit, a message for turning off the second switch. The control unit controls the first switch switching circuit to switch to the processor port, to wait for a next connection of the external device.

It can be learned that, in a power-off scenario, the control unit in the electronic device controls, by default, the switch switching circuit to switch to be short-circuited to a 0-ohm resistor. Therefore, after the first external device is connected to the electronic device, the electronic device is identified as the DCP port. After the first external device identifies the electronic device as the DCP port, some charging levels of a PD protocol and a PPS may be supported.

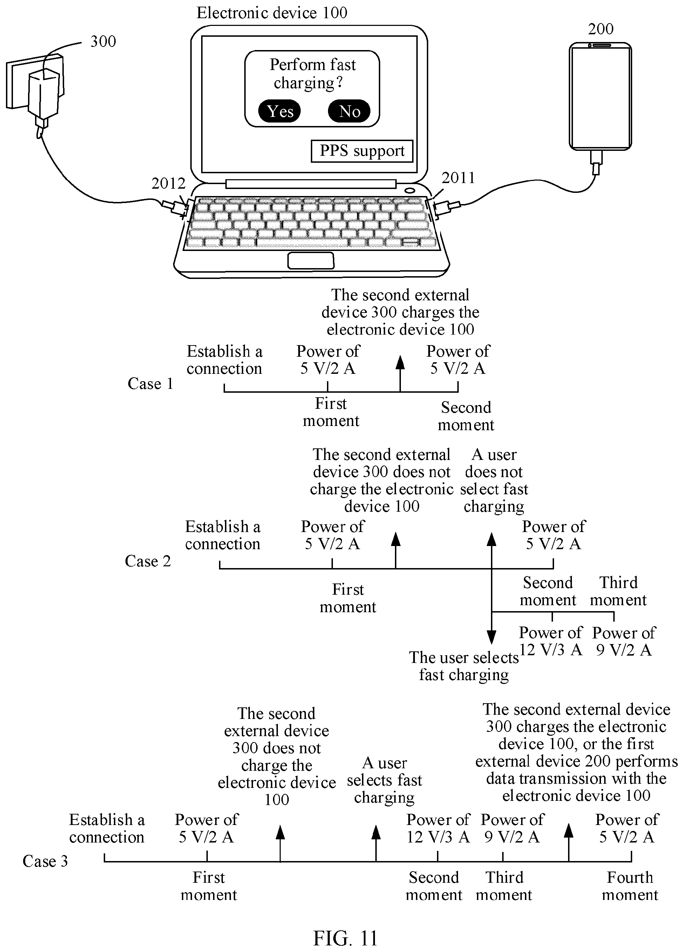

FIG. 11 is a schematic diagram of a charging scenario of dual Type-C ports based on a second charging circuit according to an embodiment of this application. The second charging circuit is the second charging circuit 102 shown in FIG. 7. In the scenario shown in FIG. 11, an electronic device 100 is in a powered-on state and/or a sleep state.

As shown in FIG. 11, the electronic device 100 is a notebook computer, and is configured with two Type-C ports: a first Type-C port 2011 and a second Type-C port 2012. The electronic device 100 may establish a connection to a first external device 200 (for example, a mobile phone) through one of the two Type-C ports (for example, the first Type-C port 2011). After establishing the connection, the electronic device 100 confirms that the electronic device 100 is a Source device, and the connected first external device 200 is a Sink device. The electronic device 100 may broadcast, to the first external device 200, charging power provided by the electronic device 100, and display PPS support in a manner of, for example, a pop-up window, and at a first moment, the first external device 200 may prioritize requesting 5 V/2 A. Therefore, at the first moment, the electronic device 100 provides power of, for example, 5 V/2 A (that is, 10 W), for the first external device 200, and the electronic device 100 may perform data transmission with the first external device 200.

It can be learned from FIG. 11 that, at the first moment, after the electronic device 100 provides the power of, for example, 5 V/2 A (that is, 10 W) for the first external device 200, there are the following several cases.

Case 1: After the first moment, if the electronic device 100 detects that a second external device 300 charges the electronic device through the second Type-C port, the electronic device 100 maintains the current charging power of 5 V/2 A unchanged. In other words, at a second moment, the first external device 200 is still charged at the power of 5 V/2 A.

Case 2: After the first moment, the electronic device 100 detects that there is no second external device 300 charging the electronic device 100 through the second Type-C port, and may display "Perform fast charging?" in a pop-up window, to prompt a user whether to select fast charging. If the user selects a "No" option, the electronic device 100 maintains, in response to a user operation of a "No" functional control, current charging power unchanged. For example, at the second moment, fast charging at power of 12 V/3 A (that is, 36 W) is still performed on the first external device 200.

If the user selects a "Yes" option, the electronic device 100 provides, in response to a user operation of a "Yes" functional control, charging power (for example, 12 V/3 A) higher than 5 V/2 A for the first external device 200. Therefore, at the second moment, fast charging at the power of 12 V/3 A (that is, 36 W) may be performed on the first external device 200. After the second moment, the electronic device 100 may adjust, in real time, charging power delivered to the first external device 200. For example, at a third moment, fast charging at power of 9 V/2 A (that is, 18 W) may be performed on the first external device 200.

Case 3: After the first moment, the electronic device 100 detects that there is no second external device 300 charging the electronic device 100 through the second Type-C port, and may display "Perform fast charging?" in a pop-up window, to prompt a user whether to select fast charging. If the user selects a "Yes" option, the electronic device 100 provides, in response to a user operation of a "Yes" functional control, charging power (for example, 12 V/3 A) higher than 5 V/2 A for the first external device 200. Therefore, at the second moment, fast charging at the power of 12 V/3 A (that is, 36 W) may be performed on the first external device 200. After the second moment, the electronic device 100 may adjust, in real time, charging power delivered to the first external device 200. For example, at a third moment, fast charging at power of 9 V/2 A (that is, 18 W) may be performed on the first external device 200. After the second moment or the third moment, the electronic device 100 detects that the second external device 300 charges the electronic device through the second Type-C port 2012, or the electronic device 100 detects that the first external device 200 performs data transmission through the first Type-C port 2011, and the charging power is restored to 5 V/2 A. Therefore, at a fourth moment after the second moment or the third moment, the first external device 200 restores being charged at the power of 5 V/2 A.

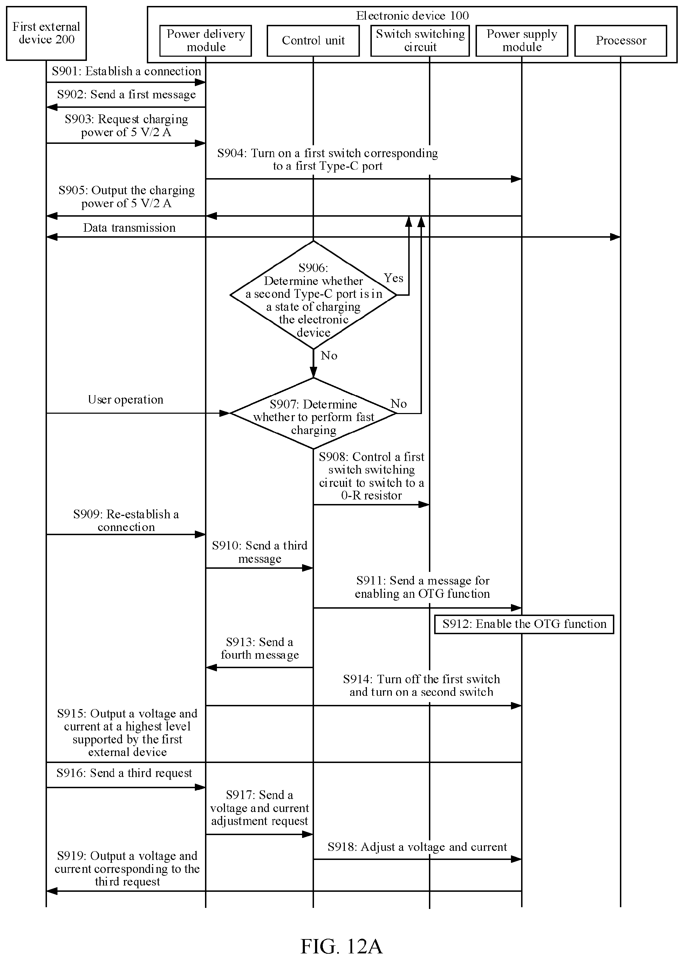

FIG. 12A to FIG. 12C are a schematic flowchart of a charging scenario of dual Type-C ports based on a second charging circuit, including but not limited to the following steps. For ease of description in this application, the following sequence of S901 to S922 is used for description, and it is not intended to limit the steps to be performed in the sequence. A sequence of performing the foregoing one or more steps, time of performing the foregoing one or more steps, a quantity of times of performing the foregoing one or more steps, and the like are not limited in embodiments of this application.

It can be learned from FIG. 7 that, an electronic device may control, by using a control unit, a switch switching circuit to switch to a processor port. In this way, after an external device is connected to the electronic device through a Type-C port, it may be determined, based on a USB2.0 protocol, that the external device is an SDP port. When the electronic device 100 is in a powered-on state and/or a sleep state, the control unit controls, by default, a first switch switching circuit 2061 and a second switch switching circuit 2062 to switch to the processor port.

S901: A first external device 200 establishes a connection to a power delivery module in the electronic device 100.

Specifically, when the first external device 200 is connected to a first Type-C port, the power delivery module 202 in the electronic device 100 and the first external device 200 perform handshake through a CC pin of the first Type-C port, and confirm that the electronic device 100 is a Source device, and the connected first external device 200 is a Sink device.

S902: The power delivery module sends a first message to the first external device 200.

Specifically, the electronic device 100 used as the Source device sends, by using the power delivery module, the first message to the first external device 200 used as the Sink device. The first message includes one or more charging power of 5 V/2 A, 9 V/2 A, 12 V/2 A, 15 V/3 A, 20 V/3.5, and the like that can be provided by the electronic device 100, and programmable power supply (PPS) support may be displayed. It should be noted that a voltage and current provided by the electronic device 100 is not limited to that provided in embodiments of this application, and a higher or lower voltage and current may be provided.

S903: The first external device 200 requests charging power of 5 V/2 A from the power delivery module.

S904: The power delivery module turns on a first switch corresponding to the first Type-C port.

Specifically, it can be learned from FIG. 7 that the power delivery module may control the first switch corresponding to the first Type-C port to be turned on or turned off, and the first switch is electrically connected to a buck circuit in a power supply module, to control, through the first switch, whether to output a voltage of 5 V output by the buck circuit to the power delivery module.

S905: The power supply module outputs the charging power of 5 V/2 A.

Specifically, the buck circuit in the voltage module is configured to output the voltage of 5 V. When the first switch corresponding to the first Type-C port is turned on, the power supply module outputs, through a pin that is in the power delivery module and that is electrically connected to the first switch, the voltage of 5 V to a VBUS pin of the first Type-C port, to provide the charging power of 5 V/2 A for the first external device 200.

When the electronic device 100 is in the powered-on state and/or the sleep state, the electronic device may control, by using the control unit, the switch switching circuit to be switched to the processor port. Therefore, after the electronic device establishes the connection to the external device, it may be confirmed, based on USB2.0, that the electronic device is the SDP port, to support a function of performing data transmission with the external device.

S906: The control unit determines whether a second Type-C port is in a state of charging the electronic device.

Specifically, the electronic device 100 has two or more Type-C ports. When the second external device is connected to a second Type-C port 2012, the power delivery module 202 in the electronic device 100 and the second external device 300 perform handshake through a CC pin of the second Type-C port 2012, and determine whether the electronic device 100 is a Source device, and the connected second external device is a Sink device.

If the electronic device 100 determines that the electronic device 100 is the Sinke device and the connected second external device is the sourc device, the electronic device 100 determines that the second Type-C port 2012 is in the state of charging the electronic device 100, and the electronic device 100 continues to provide the charging power of 5 V/2 A for the external device.

If it is determined that the second Type-C port 2012 is not in the state of charging the electronic device 100, step S907 is performed.

S907: The control unit determines whether to perform fast charging.

Specifically, as shown in FIG. 10, the electronic device may display "Perform fast charging?" in a pop-up window, and may determine, in response to a user operation on the pop-up window, to perform fast charging or not to perform fast charging.

After obtaining a message indicating not to perform fast charging, the electronic device maintains current output power and continues to provide the charging power of 5 V/2 A for the external device.

After a message indicating that fast charging is performed is obtained, step S908 is performed.

S908: The control unit controls the first switch switching circuit to switch to a 0-R resistor.

Specifically, in a UI interface of the electronic device, a user is prompted, in a manner of a pop-up window, whether to select fast charging. If the user selects fast charging, the control unit controls the first control switch switching circuit corresponding to the first Type-C port to switch from the processor port to a 0-R resistor port. It can be learned from FIG. 6 that, after the 0-R resistor segment is switched to, the first Type-C port is disconnected from the processor. If the user does not select fast charging, the electronic device continues to output the charging power of 5 V/2 A.

S909: The first external device re-establishes a connection to the power delivery module.

Specifically, after the power delivery module disables an OCP function by turning off the first switch corresponding to the first Type-C port, the first external device may re-establish a connection to the electronic device. For example, the electronic device is identified as a DCP port based on BC1.2 through the Type-C port.

S910: The power delivery module sends a third message to the control unit.

Specifically, after the electronic device establishes the connection to the first external device based on BC1.2, the first external device requests, from the power delivery module, a charging capability at a highest level supported by the first external device, and the power delivery module sends the third message to the control unit through an I2C. The third message is used to request a voltage and current at a highest level supported by the first external device.

S911: The control unit sends, to the power supply module, a message for enabling an OTG function.

Specifically, the control unit configures an OTG voltage and current of a charger chip in the power supply module based on a requirement from the power delivery module, and enables the OTG function.

S912: The power supply module enables the OTG function.

Specifically, the power supply module enables the OTG function based on configuration of the control unit.

S913: The control unit sends a fourth message to the power delivery module.

The fourth message indicates that configuration of the OTG function is completed.

S914: The power delivery module turns off the first switch corresponding to the first Type-C port, and turns on a second switch corresponding to the first Type-C port.

Specifically, after receiving the message indicating that configuration of the OTG function is completed, the power delivery module turns on the second switch corresponding to the first Type-C port and turns off the first switch corresponding to the first Type-C port.

S915: The power supply module outputs the voltage and current at the highest level supported by the first external device.

Specifically, after the second switch corresponding to the first Type-C port is turned on, the power supply module may output, through the charger chip to the first external device, the voltage and current at the highest level requested by the first external device.

S916: The first external device sends a third request to the power delivery module.

Specifically, the first external device may send the third request, for example, get PPS state, to the electronic device. The third request is used to request to adjust a voltage and current.

S917: The power delivery module sends a voltage and current adjustment request to the control unit.

S918: The control unit adjusts the voltage and current.

Specifically, the control unit adjusts the OTG voltage and current of the charger chip in the power supply module in real time based on a requirement of the power delivery module.

S919: The power supply module outputs a voltage and current corresponding to the third request to the first external device.

In some embodiments, after the first external device is disconnected from the electronic device, the power delivery module turns off the second switch, and sends, to the control unit, a message for turning off the second switch. The control unit controls the first switch switching circuit to switch to the processor port, to wait for a next connection of the external device.

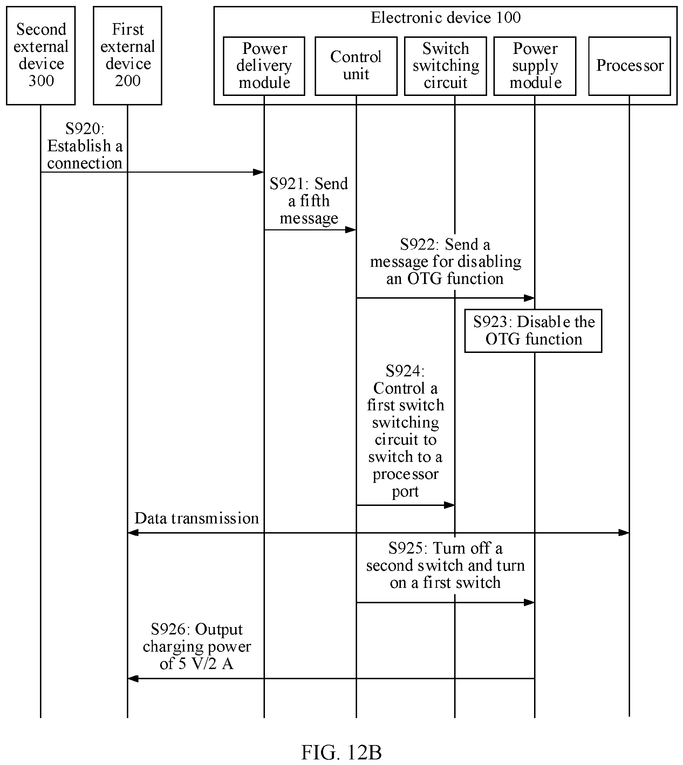

**In some possible implementations,** after any step between S910 and S919 shown in FIG. 12A, one or more steps of S920 to S926 shown in FIG. 12B are further included.

S920: The second external device establishes a connection to the power delivery module.

Specifically, the second external device (for example, a charger) is connected to the electronic device through the second Type-C port, and establishes the connection to the power delivery module. It is identified that the second external device is a Source side, the electronic device is a Sink side, and the second external device may charge the electronic device.

S921: The power delivery module sends a fifth message to the control unit.

The fifth message is used to notify the control unit that the second external device is connected to the electronic device.

S922: The control unit sends, to the power supply module, a message for disabling the OTG function.

S923: The power supply module disables the OTG function.

S924: The control unit controls the first switch switching circuit to switch to the processor port.

The first switch switching circuit is connected to the first Type-C port. After the first switch switching circuit is switched to the processor port, the first Type-C port may be connected to the processor through the first switch switching circuit. Therefore, a data transmission function of the electronic device is restored, and the first external device may perform data transmission with the electronic device.

S925: The control unit turns off the second switch and turns on the first switch.

Turning off the second switches indicates that the power supply module cannot output high power to the first external device through the charger chip, and turning on the first switch indicates that the power supply can output power of 5 V/2 A to the first external device through the buck circuit.

S926: The power supply module outputs the charging power of 5 V/2 A to the first external device.

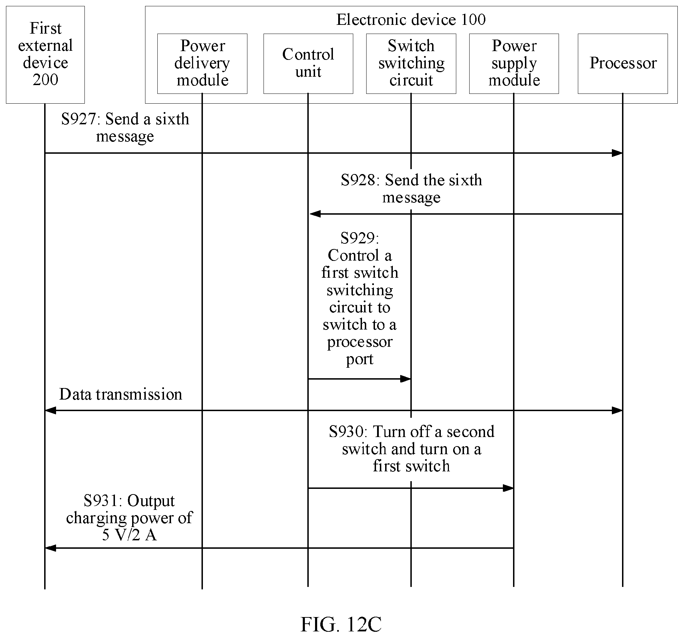

**In some possible implementations,** after any step between S910 and S919 shown in FIG. 12A, S927 to S931 shown in FIG. 12C are further included.

S927: The first external device sends a sixth message to a processor.

Specifically, the first external device may select to restore the data transmission function on the UI interface of the electronic device, to send the sixth message for restoring the data transmission function to the processor.

S928: The processor sends the sixth message to the control unit.

The sixth message is used to notify the control unit that the first external device needs to switch back to the SDP port.

S929: The control unit controls the first switch switching circuit to switch to the processor port.

The first switch switching circuit is connected to the first Type-C port. After the first switch switching circuit is switched to the processor port, the first Type-C port may be connected to the processor through the first switch switching circuit. Therefore, a data transmission function of the electronic device is restored, and the first external device may perform data transmission with the electronic device.

S930: The control unit turns off the second switch and turns on the first switch.

Turning off the two switches indicates that the power supply module cannot output high power to the first external device through the charger chip, and turning on the first switch indicates that the power supply can output power of 5 V/2 A to the first external device through the buck circuit.

S931: The power supply module outputs the charging power of 5 V/2 A to the first external device.

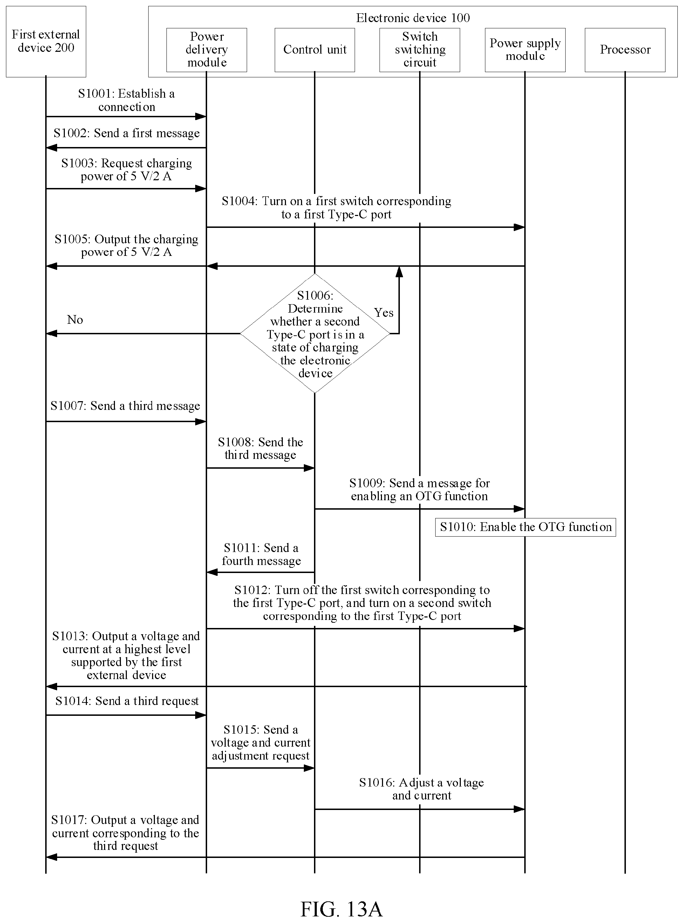

FIG. 13A to FIG. 13C are a schematic flowchart of another charging scenario of dual Type-C ports based on a second charging circuit, including but not limited to the following steps. For ease of description in this application, the following sequence of S1001 to S1017 is used for description, and it is not intended to limit the steps to be performed in the sequence. A sequence of performing the foregoing one or more steps, time of performing the foregoing one or more steps, a quantity of times of performing the foregoing one or more steps, and the like are not limited in embodiments of this application.

It can be learned from FIG. 7 that, an electronic device may control, by using a control unit, a switch switching circuit to switch to be short-circuited to a 0 R. In this way, after an external device is connected to the electronic device through a Type-C port, it may be determined, based on a USB2.0 protocol, that the external device is a DCP port. When the electronic device 100 is powered-off, the control unit controls, by default, a first switch switching circuit 2061 and a second switch switching circuit 2062 to switch to be short-circuited to the 0 R.

S1001: A first external device 200 establishes a connection to a power delivery module in an electronic device 100.

Specifically, when the first external device 200 is connected to a first Type-C port, the power delivery module 202 in the electronic device 100 and the first external device 200 perform handshake through a CC pin of the first Type-C port, and confirm that the electronic device 100 is a Source device, and the connected first external device 200 is a Sink device.

S1002: The power delivery module sends a first message to the first external device 200.

Specifically, the electronic device 100 used as the Source device sends, by using the power delivery module, the first message to the first external device 200 used as the Sink device. The first message includes one or more charging power of 5 V/2 A, 9 V/2 A, 12 V/2 A, 15 V/3 A, 20 V/3.5, and the like that can be provided by the electronic device 100, and programmable power supply (PPS) support may be displayed. It should be noted that a voltage and current provided by the electronic device 100 is not limited to that provided in embodiments of this application, and a higher or lower voltage and current may be provided.

S1003: The first external device 200 requests charging power of 5 V/2 A from the power delivery module.

S1004: The power delivery module turns on a first switch corresponding to the first Type-C port.

Specifically, it can be learned from FIG. 7 that the power delivery module may control the first switch corresponding to the first Type-C port to be turned on or turned off, and the first switch is electrically connected to a buck circuit in a power supply module, to control, through the first switch, whether to output a voltage of 5 V output by the buck circuit to the power delivery module.

S1005: The power supply module outputs the charging power of 5 V/2 A.

Specifically, the buck circuit in the voltage module is configured to output the voltage of 5 V. When the first switch corresponding to the first Type-C port is turned on, the power supply module outputs, through a pin that is in the power delivery module and that is electrically connected to the first switch, the voltage of 5 V to a VBUS pin of the first Type-C port, to provide the charging power of 5 V/2 A for the first external device 200.

When the electronic device 100 is powered-off, the electronic device may control, by using the control unit, the switch switching circuit to switch to a processor port. Therefore, after the electronic device establishes a connection to the external device, it may be determined, based on USB2.0, that the electronic device is the DCP port, and voltage adjustment or PPS adjustment may be performed.

S1006: The control unit determines whether a second Type-C port is in a state of charging the electronic device.

Specifically, the electronic device 100 has two or more Type-C ports. When the second external device is connected to a second Type-C port 2012, the power delivery module 202 in the electronic device 100 and the second external device 300 perform handshake through a CC pin of the second Type-C port 2012, and determine whether the electronic device 100 is a Source device, and the connected second external device is a Sink device.

If the electronic device 100 determines that the electronic device 100 is the Sink device and the connected second external device is the Source device, the electronic device 100 determines that the second Type-C port 2012 is in the state of charging the electronic device 100, and the electronic device 100 continues to provide the charging power of 5 V/2 A for the external device.

If it is determined that the second Type-C port 2012 is not in the state of charging the electronic device 100, step S1007 is performed.

S1007: The first external device sends a third message to the power delivery module.

The third message is used to request, from the electronic device, a voltage and current at a highest level supported by the first external device, for example, 12 V/2 A.

S1008: The power delivery module sends a third message to the control unit.

Specifically, the power delivery module sends the third message to the control unit through an I2C. The fourth message is used to request the control unit to configure the voltage and current at the highest level supported by the first external device.

S1009: The control unit sends, to the power supply module, a message for enabling an OTG function.

Specifically, the control unit configures an OTG voltage and current of a charger chip in the power supply module based on a requirement from the power delivery module, and enables the OTG function.

S1010: The power supply module enables the OTG function.

Specifically, the power supply module enables the OTG function based on configuration of the control unit.

S1011: The control unit sends a fourth message to the power delivery module.

The fourth message indicates that configuration of the OTG function is completed.

S1012: The power delivery module turns off the first switch corresponding to the first Type-C port, and turns on a second switch corresponding to the first Type-C port.

Specifically, after receiving the message indicating that configuration of the OTG function is completed, the power delivery module turns on the second switch corresponding to the first Type-C port and turns off the first switch corresponding to the first Type-C port.

S1013: The power supply module outputs the voltage and current at the highest level supported by the first external device.

Specifically, after the second switch corresponding to the first Type-C port is turned on, the power supply module may output, through the charger chip to the first external device, the voltage and current at the highest level requested by the first external device.

S1014: The first external device sends a third request to the power delivery module.

Specifically, the first external device may send the third request, for example, get PPS state, to the electronic device. The third request is used to request to adjust a voltage and current.

S1015: The power delivery module sends a voltage and current adjustment request to the control unit.

S1016: The control unit adjusts the voltage and current.

Specifically, the control unit implements and adjusts the OTG voltage and current of the charger chip in the power supply module based on a requirement of the power delivery module.

S1017: The power supply module outputs a voltage and current corresponding to the third request to the first external device.

In some embodiments, after the first external device is disconnected from the electronic device, the power delivery module turns off the second switch, and sends, to the control unit, a message for turning off the second switch. The control unit controls the first switch switching circuit to switch to the processor port, to wait for a next connection of the external device.

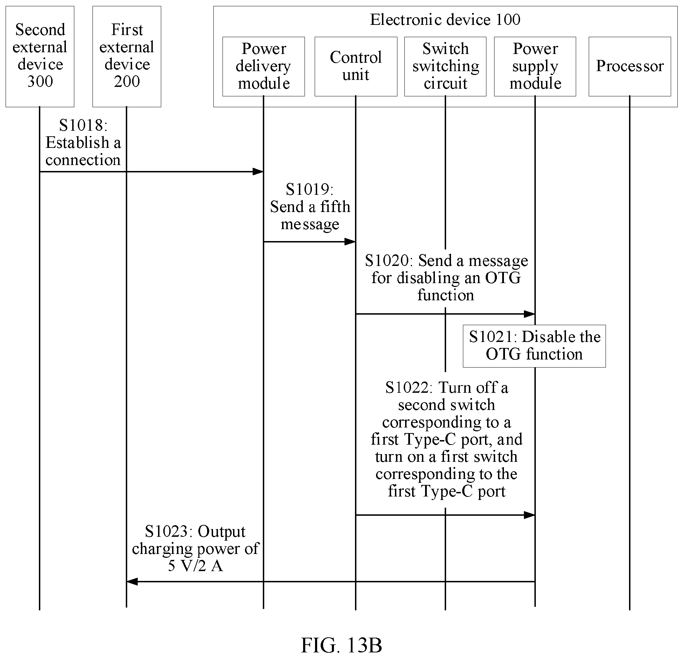

**In some possible implementations,** after any step between S1007 and S1017 shown in FIG. 13A, one or more steps of S1018 to S1023 shown in FIG. 13B are further included.

S1018: The second external device establishes a connection to the power delivery module.

Specifically, the second external device (for example, a charger) is connected to the electronic device through the second Type-C port, and establishes the connection to the power delivery module. It is identified that the second external device is a Source side, the electronic device is a Sink side, and the second external device may charge the electronic device.

S1019: The power delivery module sends a fifth message to the control unit.

The fifth message is used to notify the control unit that the second external device is connected to the electronic device.

S1020: The control unit sends, to the power supply module, a message for disabling the OTG function.

S1021: The power supply module disables the OTG function.

S1022: The control unit turns off the second switch corresponding to the first Type-C port, and turns on the first switch corresponding to the first Type-C port.

Turning off the second switch indicates that the power supply module cannot output high power to the first external device through the charger chip, and turning on the first switch indicates that the power supply can output power of 5 V/2 A to the first external device through the buck circuit.

S1023: The power supply module outputs the charging power of 5 V/2 A to the first external device.

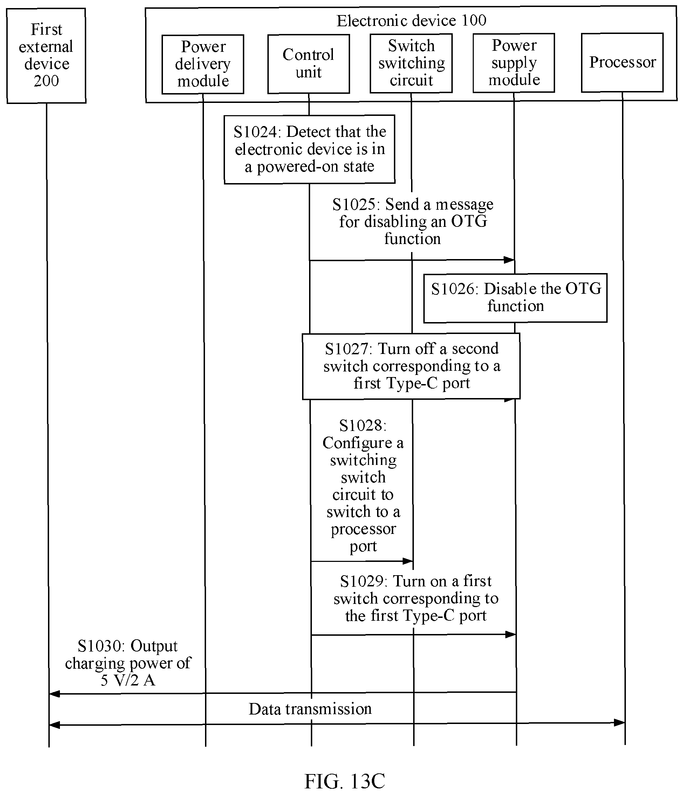

**In some possible implementations,** after any step between S1007 and S1017 shown in FIG. 13A, S1024 to S1030 shown in FIG. 13C are further included.

S1024: The control unit detects that the electronic device is in a powered-on state.

Specifically, the electronic device responses to a user operation on a power-on key, and a detection unit may detect that the electronic device is in the powered-on state.

S1025: The control unit sends, to the power supply module, a message for disabling the OTG function.

S1026: The power supply module disables the OTG function.

S1027: The control unit turns off the second switch corresponding to the first Type-C port.

S1028: The control unit configures the switch switching circuit to switch to the processor port.

Specifically, the control unit configures the first switch switching circuit to switch to the processor port, and configures the second switch circuit to switch to the processor port.

S1029: The control unit turns on the first switch corresponding to the first Type-C port.

S1030: The power supply module outputs the charging power of 5 V/2 A to the first external device.

Because the first Type-C port may be connected to the processor through the first switch switching circuit, after the electronic device is powered-on, the first external device may perform data communication with the electronic device through the first Type-C port. Similarly, the second external device connected to the second Type-C port may perform data communication with the electronic device through the second switch switching circuit.

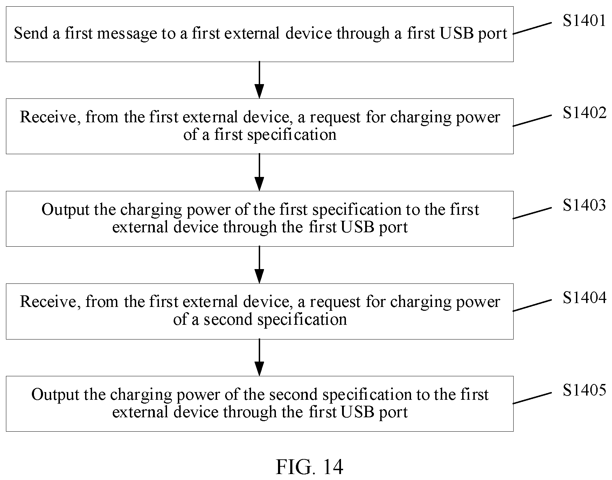

FIG. 14 is a schematic flowchart of a charging method according to an embodiment of this application. The method is applied to an electronic device, for example, the electronic device 100 shown in FIG. 1, FIG. 2, or FIG. 7. The method includes but is not limited to the following steps:

S1401: The electronic device sends a first message to a first external device through a first USB port.

Specifically, for detailed descriptions, refer to S401 and S402 shown in FIG. 4, S501 and S502 shown in FIG. 6, S701 and S702 shown in FIG. 9, S801 and S802 shown in FIG. 10, S901 and S902 shown in FIG. 12A, or S1001 and S1002 shown in FIG. 13A.

S1402: The electronic device receives, from the first external device, a request for charging power of a first specification.

Specifically, for detailed descriptions, refer to S403 shown in FIG. 4, S503 shown in FIG. 6, S703 shown in FIG. 9, S803 shown in FIG. 10, S903 shown in FIG. 12A, or S1003 shown in FIG. 13A.

S1403: The electronic device outputs the charging power of the first specification to the first external device through the first USB port.

For detailed descriptions, refer to S404 and S405 shown in FIG. 4, S504 and S505 in FIG. 6, S704 and S705 shown in FIG. 9, S804 and S805 shown in FIG. 10, S904 and S905 shown in FIG. 12A, or S1004 and S1005 shown in FIG. 13A.

S1404: The electronic device receives, from the first external device, a request for charging power of a second specification.

Specifically, for detailed descriptions, refer to S406 shown in FIG. 4 or S506 shown in FIG. 6.

In a possible implementation, the electronic device further includes a switch switching circuit and a processor. The switch switching circuit corresponds to one or more USB ports, and the switch switching circuit is connected to the processor and short-circuited to a 0-ohm resistor. For detailed descriptions, refer to FIG. 7.

In an implementation, the switch switching circuit is configured to be connected to the first USB port and the processor. After outputting the charging power of the first specification to the first external device through the first USB port and before receiving, from the first external device, the request for the charging power of the second specification, the electronic device may further receive a fast charging request from the first external device, control, in response to the fast charging request, the switch switching circuit to switch from being connected to the processor to being connected to the 0-ohm resistor, and perform protocol interaction with the first external device through the first USB port, to determine that the electronic device is a dedicated charging port DCP port. For detailed descriptions, refer to S706 to S709 shown in FIG. 9 or S907 to S911 shown in FIG. 12A.

In an implementation, the electronic device is connected to a second external device through a second USB port in the one or more USB ports, and when it is determined that the second external device located at the second USB port does not charge the electronic device, the electronic device receives the fast charging request from the first external device. For detailed descriptions, refer to S906 and S907 shown in FIG. 12A or S1006 and S1007 shown in FIG. 13A.

In a possible implementation, when the switch switching circuit is connected to the first USB port and the 0-ohm resistor, the electronic device is the DCP port. For detailed descriptions, refer to S806 and S807 shown in FIG. 10 or S1007 and S1008 shown in FIG. 13A.

S1405: The electronic device outputs the charging power of the second specification to the first external device through the first USB port.

In a possible implementation, the electronic device includes one or more of a power delivery module, a control unit, and a power supply module. An on-the-go OTG function of the power supply module is enabled by using the control unit. A second switch of the power supply module is enabled by using the power delivery module. The second switch is configured to connect the first USB port and a charger chip in the power supply module, and the charger chip in the power supply module is configured to provide the charging power of the second specification. The charging power of the second specification is output, based on the OTG function and the second switch in an on state, to the first external device through the first USB port.

In a possible implementation, when it is determined that a system of the electronic device is not in a working state and/or a battery level of the electronic device is greater than or equal to a preset threshold, the electronic device outputs the charging power of the second specification to the first external device through the first USB port. For detailed descriptions, refer to S407 to S413 shown in FIG. 4.

In a possible implementation, the electronic device is connected to a second external device through a second USB port in the one or more USB ports, and when it is determined that the second external device located at the second USB port does not charge the electronic device, or when it is determined that a system of the electronic device is not in a working state and/or a battery level of the electronic device is greater than or equal to a preset threshold, outputs the charging power of the second specification to the first external device through the first USB port. For detailed descriptions, refer to S507 to S518 shown in FIG. 6.

In a possible implementation, the switch switching circuit is configured to be connected to the first USB port and the processor. The electronic device is connected to a second external device through a second USB port in the one or more USB ports, and outputs the charging power of the second specification to the first external device through the first USB port. For detailed descriptions, refer to S710 to S715 shown in FIG. 9.

In a possible implementation, when the switch switching circuit is connected to the first USB port and the 0-ohm resistor, the electronic device is the DCP port and outputs the charging power of the second specification to the first external device through the first USB port. For detailed descriptions, refer to S807 to S812 shown in FIG. 10.

In a possible implementation, the switch switching circuit is configured to be connected to the first USB port and the processor. The electronic device is connected to a second external device through a second USB port in the one or more USB ports, and when it is determined that the second external device located at the second USB port does not charge the electronic device, outputs the charging power of the second specification to the first external device through the first USB port. For detailed descriptions, refer to S912 to S917 shown in FIG. 12A. In a possible implementation, when the switch switching circuit is connected to the first USB port and the 0-ohm resistor, the electronic device is the DCP port. The electronic device is connected to a second external device through a second USB port in the one or more USB ports, and when it is determined that the second external device located at the second USB port does not charge the electronic device, outputs the charging power of the second specification to the first external device through the first USB port. For detailed descriptions, refer to S1008 to S1013 shown in FIG. 13A.

In a possible implementation, after outputting the charging power of the second specification to the first external device through the first USB port, the electronic device receives, from the electronic device, a request for charging power of a third specification, adjusts a voltage and current based on the request for the charging power of the third specification, and outputs a voltage and current corresponding to the request for the charging power of the third specification. For detailed descriptions, refer to S716 to S719 shown in FIG. 9, S813 to S816 shown in FIG. 10, S918 to S921 shown in FIG. 12A, or S1014 to S1017 shown in FIG. 13A.

The term "user interface (user interface, UI)" in the specification, the claims, and the accompanying drawings of this application is a medium interface for interaction and information exchange between an application or an operating system and a user, and conversion between an internal form of information and a form of the information acceptable to the user is implemented by using the user interface. A user interface of an application is Source code written in a specific computer language such as java or an extensible markup language (extensible markup language, XML). The interface Source code is parsed and rendered on a terminal device, and finally presented as user-recognizable content, for example, a control such as a picture, text, or a button. A control (control), also referred to as a widget (widget), is a basic element of a user interface. Typical controls include a toolbar (toolbar), a menu bar (menu bar), a text box (text box), a button (button), a scrollbar (scrollbar), a picture, and text. An attribute and content of the control on the interface are defined by using a label or a node. For example, the control included on the interface is defined in an XML by using a node such as <Textview>, <ImgView>, or <VideoView>. One node corresponds to one control or attribute on the interface. After being parsed and rendered, the node is presented as user-visible content. In addition, interfaces of many applications, for example, a hybrid application (hybrid application), usually include a webpage. A webpage, also referred to as a page, may be understood as a special control embedded in an application interface. The webpage is Source code written in specific computer languages such as a hyper text markup language (hyper text markup language, HTML), a cascading style sheet (cascading style sheets, CSS), and a javascript (JavaScript, JS). The Source code of the webpage may be loaded and displayed by a browser or a webpage display component with similar functions to the browser as content that can be recognized by the user. Specific content included in the webpage is also defined by using a label or a node in the Source code of the webpage. For example, an element and an attribute of the webpage are defined in an HTML by using <p>, <img>, <video>, or <canvas>.

The user interface is usually represented in a form of a graphical user interface (graphic user interface, GUI), and is a user interface that is related to a computer operation and that is displayed in a graphic manner. The graphical user interface may be an interface element such as an icon, a window, or a control that is displayed on a display screen of an electronic device. The control may include visible interface elements such as an icon, a button, a menu, a tab, a text box, a dialog box, a status bar, a navigation bar, and a widget.

It should be understood that the steps in the foregoing method embodiments provided in this application may be completed by using an integrated logic circuit of hardware or instructions in a form of software in a processor. The steps of the method disclosed with reference to embodiments of this application may be directly performed and completed by a hardware processor, or may be performed and completed by a combination of hardware in the processor and a software module.

This application further provides an electronic device. The electronic device may include a memory and a processor. The memory may be configured to store a computer program, and the processor may be configured to invoke the computer program in the memory to enable the electronic device to perform the method in any one of the foregoing embodiments.

This application further provides a chip system. The chip system includes at least one processor, configured to implement the functions in the method performed by the electronic device in any one of the foregoing embodiments.

In a possible design, the chip system further includes a memory. The memory is configured to store program instructions and data, and the memory is located inside or outside the processor.

The chip system may include a chip, or may include a chip and another discrete device.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated chip (application specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

This application further provides a computer program product. The computer program product includes a computer program (which may also be referred to as code or an instruction). When the computer program is run, a computer is enabled to perform the method performed by the electronic device in any one of the foregoing embodiments.

This application further provides a computer-readable storage medium. The computer-readable storage medium stores a computer program (which may also be referred to as code or an instruction). When the computer program is run, a computer is caused to perform the method performed by the electronic device in any one of the foregoing embodiments.

Various implementations of this application may be combined randomly to achieve different technical effects.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When computer program instructions are loaded and executed on the computer, all or a part of the procedures or functions according to this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid State Disk)), or the like.

A person of ordinary skill in the art may understand that all or some of the processes of the methods in embodiments may be implemented by a computer program instructing relevant hardware. The program may be stored in a computer-readable storage medium. When the program is executed, the processes of the foregoing method embodiments may be performed. The foregoing storage medium includes: any medium that can store program code, such as a ROM, a random access memory RAM, a magnetic disk, or an optical disc.

In conclusion, the foregoing descriptions are merely embodiments of the technical solution of the present invention, but are not intended to limit the protection scope of the present invention. Any modification, equivalent replacement, improvement, and the like made based on the disclosure of the present invention still fall within the scope of protection of the present invention.

## Claims

1. A charging method, applied to an electronic device, wherein the electronic device comprises one or more universal serial bus USB ports, the electronic device is connected to a first external device through a first USB port in the one or more USB ports, and the method comprises:
sending a first message to the first external device through the first USB port, wherein the first message comprises charging power that the electronic device supports outputting to the first external device;
receiving, from the first external device, a request for charging power of a first specification, wherein the charging power of the first specification is the charging power that the electronic device supports outputting to the first external device;
outputting the charging power of the first specification to the first external device through the first USB port;
receiving, from the first external device, a request for charging power of a second specification, wherein the charging power of the second specification comprises charging power of a highest charging level that can be received by the first external device, the charging power of the second specification is the charging power that the electronic device supports outputting to the first external device, and the charging power of the second specification is greater than the charging power of the first specification; and
outputting the charging power of the second specification to the first external device through the first USB port.

2. The method according to claim 1, wherein the electronic device further comprises a switch switching circuit and a processor, the switch switching circuit corresponds to the one or more USB ports, and the switch switching circuit is connected to the processor and short-circuited to a 0-ohm resistor.

3. The method according to claim 1, wherein the outputting the charging power of the second specification to the first external device through the first USB port comprises:
when it is determined that a system of the electronic device is not in a working state and/or a battery level of the electronic device is greater than or equal to a preset threshold, outputting the charging power of the second specification to the first external device through the first USB port.

4. The method according to claim 2 or 3, wherein the electronic device is connected to a second external device through a second USB port in the one or more USB ports, and the outputting the charging power of the second specification to the first external device through the first USB port comprises:
when it is determined that the second external device located at the second USB port does not charge the electronic device, outputting the charging power of the second specification to the first external device through the first USB port.

5. The method according to claim 2, wherein the switch switching circuit is configured to be connected to the first USB port and the processor, and after the outputting the charging power of the first specification to the first external device through the first USB port and before the receiving, from the first external device, a request for charging power of a second specification, the method further comprises:
receiving a fast charging request from the first external device;
controlling, in response to the fast charging request, the switch switching circuit to switch from being connected to the processor to being connected to the 0-ohm resistor; and
performing protocol interaction with the first external device through the first USB port, and determining that the electronic device is a dedicated charging port DCP port.

6. The method according to claim 5, wherein the electronic device is connected to a second external device through a second USB port in the one or more USB ports, and the receiving a fast charging request from the first external device comprises:
when it is determined that the second external device located at the second USB port does not charge the electronic device, receiving the fast charging request from the first external device.

7. The method according to claim 2, wherein when the switch switching circuit is connected to the first USB port and the 0-ohm resistor, the electronic device is a DCP port.

8. The method according to claim 7, wherein the electronic device is connected to a second external device through a second USB port in the one or more USB ports, and the outputting the charging power of the second specification to the first external device through the first USB port comprises:
when it is determined that the second external device located at the second USB port does not charge the electronic device, outputting the charging power of the second specification to the first external device through the first USB port.

9. The method according to claim 2, wherein after the outputting the charging power of the second specification to the first external device through the first USB port, the method further comprises:
receiving, from the first external device, a request for charging power of a third specification; and
adjusting a voltage and current based on the request for the charging power of the third specification, and outputting a voltage and current corresponding to the request for the charging power of the third specification.

10. The method according to claim 1 or 2, wherein the electronic device comprises one or more of a power delivery module, a control unit, and a power supply module, and the outputting the charging power of the second specification to the first external device through the first USB port comprises:
enabling an on-the-go OTG function of the power supply module by using the control unit;
turning on a second switch of the power supply module by using the power delivery module, wherein the second switch is configured to be connected to the first USB port and a charger chip in the power supply module, and the charger chip in the power supply module is configured to provide the charging power of the second specification; and
outputting the charging power of the second specification to the first external device through the first USB port based on the OTG function and the second switch in an on state.

11. An electronic device, comprising one or more USB ports, a power delivery module, a control unit, and a power supply module, wherein the electronic device is connected to a first external device through a first USB port in the one or more USB ports, and
the power delivery module is configured to send a first message to the first external device through the first USB port, wherein the first message comprises charging power that the electronic device supports outputting to the first external device;
the power delivery module is configured to receive, from the first external device through the first USB port, a request for charging power of a first specification, wherein the charging power of the first specification is the charging power that the electronic device supports outputting to the first external device;
the control unit is configured to control the power supply module to output the charging power of the first specification;
the power delivery module is configured to output the charging power of the first specification to the first external device through the first USB port;
the power delivery module is further configured to receive, from the first external device through the first USB port, a request for charging power of a second specification, wherein the charging power of the second specification comprises charging power of a highest charging level that can be received by the first external device, the charging power of the second specification is the charging power that the electronic device supports outputting to the first external device, and the charging power of the second specification is greater than the charging power of the first specification;
the control unit is configured to control said power supply module to output the charging power of the second specification; and
the power delivery module is configured to output the charging power of the second specification to the first external device through the first USB port.

12. The electronic device according to claim 11, wherein the electronic device further comprises a switch switching circuit and a processor, the switch switching circuit corresponds to the one or more USB ports, and the switch switching circuit is connected to the processor and short-circuited to a 0-ohm resistor.

13. An electronic device, comprising one or more USB ports, one or more processors, and a memory, wherein the USB port is configured to establish a connection to a device, the memory is coupled to the one or more processors, the memory is configured to store computer program code, the computer program code comprises computer instructions, and the one or more processors invoke the computer instructions to enable the electronic device to perform the method according to any one of claims 1 to 10.

14. A chip system, used in an electronic device, wherein the chip system comprises one or more processors, and the processor is configured to invoke computer instructions to enable the electronic device to perform the method according to any one of claims 1 to 10.

15. A computer program product comprising instructions, wherein when the computer program product runs on an electronic device, the electronic device is enabled to perform the method according to any one of claims 1 to 10.

16. A computer-readable storage medium, comprising instructions, wherein when the instructions are run on an electronic device, the electronic device is enabled to perform the method according to any one of claims 1 to 10.
